# EUROPEAN PATENT SPECIFICATION

(11) **EP 2 630 209 B1**
(45) Date of publication and mention of the grant of the patent: **01.02.2017**
(21) Application number: 11845062.6
(22) Date of filing: 20.10.2011
(51) Int. Cl.: C09D 127/04, C09D 201/00, B05D 1/36

(54) **WATER-BASED COATING SYSTEM WITH IMPROVED MOISTURE AND HEAT RESISTANCE**
BESCHICHTUNGSSYSTEM AUF WASSERBASIS MIT VERBESSERTER FEUCHTIGKEITS- UND WÄRMEBESTÄNDIGKEIT
SYSTÈME DE REVÊTEMENT À BASE D'EAU POSSÉDANT UNE RÉSISTANCE AMÉLIORÉE À L'HUMIDITÉ ET À LA CHALEUR

(30) Priority: 20.10.2010 US 394972 P; 08.03.2011 US 201161450471 P
(43) Date of publication of application: 28.08.2013
(73) Proprietor: Valspar Sourcing, Inc., Minneapolis, MN 55440 (US)
(72) Inventor: BEAUDRY, Channing, Elk River, MN 55330 (US); ZHANG, Feng, Shanghai Jiangxi 201818 (CN); FOUQUETTE, David, Foley, Minnesota 56329 (US); PREVOST, James, Prior Lake, Minnesota 55372 (US); BOESPFLUG, Donald, Lino Lakes, Minnesota 55014 (US); WETZEL, Wylie, Woodbury, Minnesota 55129 (US); BLATTER, Walter, Woodbury, Minnesota 55125 (US); KILLILEA, T. Howard, North Oaks, Minnesota 55127 (US)
(74) Representative: Vossius & Partner Patentanwälte Rechtsanwälte mbB
(86) International application number: PCT/US2011/057040
(87) International publication number: WO 2012/074617

(56) References cited:
- EP-A1- 1 151 854
- EP-A2- 0 268 042
- EP-A2- 1 148 084
- WO-A2-2009/057104
- FR-A1- 2 930 947
- US-A- 5 476 890
- US-A1- 2007 282 027
- US-A1- 2009 098 395

## Description

### FIELD OF THE INVENTION

The present invention relates to water-based coating systems used to form protective coatings on substrates and in particular metal containing substrates. More particularly, the present invention relates to coating compositions, and coating systems involving an aqueous primer composition (also referred to as a basecoat) incorporating at least one chlorinated resin and an optional aqueous topcoat composition, wherein the topcoat composition preferably has a sufficiently high pigment loading to promote enhanced performance of the resultant coatings, including, for example, enhanced durability, thermal protection, and service life.

### BACKGROUND OF THE INVENTION

Intermodal cargo containers (also referred to as freight or shipping containers) are reusable transport and storage units for moving products and raw materials between locations, including between countries. Intermodal cargo containers are standardized to facilitate intermodal transport such as among marine transport, freight train transport, and freight truck transport. Standardization of cargo containers also is referred to as containerization.

Containerization has provided global commerce with many benefits. Shipped goods move more easily and cheaply. Manufacturers know that goods loaded at one location can be readily unloaded at the destination. Cargo security has been improved, as containers are usually sealed and can be locked to discourage tampering and theft. Containers also have a longer service life, and there is a stronger market for used containers. Additionally, the costs of cargo containers themselves is lowered because a manufacturer can make these in larger volume knowing that potential customers are available all over the world.

Several international standards have been created to promote international containerization. For instance, the International Organization for Standardization (ISO) has promulgated applicable standards including R-668 to define terminology, dimensions, and ratings; R-790 to define identification markings; R-1161 to recommend corner fittings; and R-1897 to set forth dimensions for general purpose containers. Other standards include ASTM D5728-00, ISO 9897 (1997); ISO 14829 (2002); ISO 17363 (2007); ISO/PAS 17712 (2006); ISO 18185 (2007); and ISO/TS 10891 (2009). An international specification for coating/paint performance is provided by IICL (Institute of International Container Lessors). See also International Organization for Standardization (ISO), Freight Containers, Vol. 34 of ISO Standards Handbook, 4th Ed., 2006, ISBN 92-67-10426-8; and Levinson, Marc, The Box: How the Shipping Container Made the World Smaller and the World Economy Bigger, Princeton, NJ, Princeton University Press, 2006, ISBN 0691123241.

Cargo containers experience harsh, corrosive environments during their service life. When shipped by sea, the containers are exposed to the corrosive effects of salt water. When exposed to nature, the containers must withstand wind, sun, hail, rain, sand, and heat. Containers exposed to tire sun can bake to temperatures of 82°C (180°F) or even higher, with darker colored containers being prone to excessive heat levels.

Accordingly, cargo containers must be made in a way that allows the containers to survive this exposure for a reasonable service life. As one strategy, containers can be made from corrosion resistant materials such as stainless steel, weather steel (also known as weathering steel, COR-TEN brand steel, or CORTEN brand steel). Even when made from such corrosion resistant materials, it still generally is desirable to further apply durable, abrasion resistant, corrosion resistant coatings on the containers as further protection against degradation. Coatings also may be used for decorative, informative, or brand identity reasons.

The interior of a cargo container must also meet stringent industry standards. For example, a food-grade container cannot exhibit any persistent odor when the cargo door is first opened, including the odor produced by outgassing solvents. Therefore, it is desirable to apply durable, abrasion resistant, corrosion resistant and low-odor coatings to the exterior and interior surfaces of a cargo container.

A typical coating strategy involves applying a topcoating over a primer coating. Historically, mostly solvent-based coating systems have been used to protect cargo containers as many proposed water-based systems have been unable to satisfy the applicable performance demands and/or standards. Consequently, only solvent-based coating systems have found widespread commercial acceptance in the industry. The container industry retains a strong bias against using prior proposed water-based coating systems.

With increased environmental awareness, there is a strong desire to develop technology that would allow use of water-based coating systems to protect cargo containers or other substrates (e.g., vehicles such as rail cars, and trucks). Significant challenges remain. As one serious challenge, it has been very difficult to formulate water-based coating systems that show acceptable adhesion to underlying container surfaces. Many conventional water-based systems fail to pass applicable salt spray testing procedures. The coatings blister, peel, crack, or otherwise show poor durability. Some water-based coatings offer too little protection against corrosion. Thus, there is a strong need to improve the moisture resistance of these coatings. The industry strongly desires a commercially available, water-based coating system that is able to satisfy the stringent demands of the intermodal cargo container industry.
FR-A-2 930 947 describes to a composition comprising: (a) at least one halogenated vinyl polymer and (b) at least one copolymer comprising (i) units derived from a first monomer (A) making said copolymer compatible with said vinyl polymer halogenated and (ii) units derived from a second monomer (B) carrying at least one associative group. It also describes the use of such acomposition.

EP-A-1 148 084 describes a film with a high thickness coating, consisting of a thermoplastic base, wherein the high thickness coating comprises a first layer made up of a primer in dispersion, suspension or aqueous emulsion and at least one subsequent homogeneous layer of a PVDC (polyvinylidene-chloride) copolymer, characterized in that said at least one homogeneous layer of PVDC (polyvinylidene-chloride) copolymer is present in a quantity of at least 20 g/m².

### SUMMARY OF THE INVENTION

The present invention provides a coating system comprising a first coating composition and a second aqueous coating composition; or a second coating compositionas described in claim 1.

Furthermore, the present invention provides a coated article comprising a substrate surface, a first coating formed directly or indirectly on at least a portion of the substrate surface, said coating comprising the first aqueous coating composition of the coating system of claim 1; and optionally, a second coating formed directly our indirectly on at least a portion of the first coating, said coating comprising the second coating composition of the coating system of claim 1.

The present invention provides a water-based coating system that can be used to form durable, abrasion resistant, heat resistant, corrosion resistant, protective barriers on a wide range of substrates. The coating system is particularly effective for protecting metal-containing substrates, such as intermodal cargo containers, vehicles (e.g., rail cars, trucks), and structural features (bridges, water towers, supports) against corrosion. Moreover, because the coating system is water-based, it reduces or eliminates emissions and factory pollution during manufacture and application. The water-based coating described herein can be used to paint the interior of food-grade containers without concern over persistent odors or prolonged outgassing of solvent common to solvent-based coating systems.

As an overview, the present invention provides water-based primer compositions suitable to form corrosion-resistant coatings on substrates, as primer coats on substrates, and as topcoat compositions suitable to form optional topcoats directly or indirectly on the primer coats. Desirably, the coatings, and especially the primer coats, incorporate one or more chlorinated resins for excellent corrosion protection. These chlorinated resins not only provide excellent corrosion protection but also show excellent adhesion to a wide range of substrate materials.

Unfortunately, chlorinated polymers such as polyvinylidene chloride are susceptible to degradation in strongly acidic aqueous environments, and on exposure to higher temperatures, e.g., temperatures above 150°F (65.5°C) or even above 180°F (82.2°C). This degradation can lead to a number of coating issues, including reduced corrosion protection, peeling, blistering, and cracking. It would be desirable to be able to improve the heat resistance and corrosion resistance of chlorinated resins to increase their useful operating range. Significantly, the present invention provides strategies that can be used singly or in combination that may improve the heat resistance and corrosion resistance of the chlorinated resins.

The present invention also provides water-based compositions that may be used to form topcoats on the underlying primer coats with excellent adhesion, durability, and moisture resistance. Preferred topcoats have high pigment loading to help make the coatings more resistant to blistering, peeling, and cracking, while still allowing high levels of corrosion resistance to be retained.

Conventionally, there has been a strong bias in the industry to only use solvent-based coating systems to protect cargo containers. The bias is that water-based coatings lack the kind of processability and performance needed to survive in this challenging environment. Surprisingly, the present invention provides a water-based coating system that shows excellent performance when used to protect such cargo containers, surviving challenging industry tests normally satisfied only by solvent-based systems. For instance, the coatings of the present invention pass applicable salt spray testing standards and show excellent heat resistance.

The water-based coatings of the present invention also provide significant environmental benefits. They produce lower factory pollution and emission during application to cargo containers. Moreover, the water-based coatings of the present invention enable coated containers to be used immediately for the transport of absorptive goods such as food stuff, for example. Food stuff cannot be transported in containers freshly painted with solvent-based coatings, because the solvent will volatilize or outgas and contaminate the food stuff.

Each of the primer composition and the topcoat composition of the invention independently can be applied on substrates in one or more coats. Optionally, these compositions can be used in combination with other coating compositions as well. For instance, the coating system of the invention can be applied over a substrate that is at least partially coated with another primer or other coating(s), such as an epoxy primer. As one advantage, however, the water-based coating compositions of the present invention can be applied, if desired, as a two-coat system (topcoat layer over primer layer) and still meet stringent performance standards of the intermodal container industry. This is quite significant for an environmentally friendly, water-based coating system. In the past, mainly only solvent-based systems have been able to meet industry demands when applied as a two-coat system. In short, the present invention provides an environmental and application-friendly system that passes applicable industry standard testing and that can be applied to substrates such as intermodal cargo containers in a similar fashion to solvent based coatings. One advantage of a two-coat system versus a system that involves more coats is that the two-coat system requires less time for drying on line, thereby enhancing throughput during the coating stage.

### Selected Definitions

The term "component" refers to any part of a composition, polymer or coating that includes a particular feature or structure. Examples of components include compounds, monomers, oligomers, polymers, and organic groups contained there.

The term "double bond" refers to any type of double bond between any suitable atoms (e.g., C, O, and N). The term "triple bond" refers to any type of triple bond between any suitable atoms.

The term "crosslinker" refers to a molecule capable of forming a covalent linkage between polymers or between two different regions of the same polymer. The term "self crosslinking," when used in the context of a self crosslinking polymer, refers to the capacity of a polymer to enter into a crosslinking reaction with itself and/or another polymer, in the absence of an external crosslinker, to form a covalent linkage therebetween. Typically, this crosslinking reaction occurs through reaction of complimentary reactive functional groups present on the self-crosslinking polymer itself or two separate molecules of the self-crosslinking polymer.

The term "water-dispersible" in the context of a water-dispersible polymer means that the polymer can be mixed into water (or an aqueous carrier) to form a stable mixture. For example, a stable mixture will not separate into immiscible layers over a period of at least 2 weeks when stored at 49°C (120°F), or when physical force (such as vibration, for example) is applied. The term "water-dispersible" is intended to include the term "water-soluble." In other words, by definition, a water-soluble polymer is also considered to be a water-dispersible polymer.

The term "dispersion" in the context of a dispersible polymer refers to the mixture of a dispersible polymer and a carrier. Except as otherwise indicated, the term "dispersion" is intended to include the term "solution."

As used herein, a "latex" polymer means that a polymer is in admixture with an aqueous carrier with the help of at least one emulsifying agent (e.g., a surfactant) for creating an emulsion of polymer particles in the carrier.

The term "thermoplastic" refers to a material that melts and changes shape when sufficiently heated and hardens when sufficiently cooled. Such materials are typically capable of undergoing repeated melting and hardening without exhibiting appreciable chemical change. In contrast, a "thermoset" refers to a material that is crosslinked and does not "melt."

Unless otherwise indicated, a reference to a "(meth)acrylate" compound (where "meth" is bracketed) is meant to include both acrylate and methacrylate compounds.

The term "polycarboxylic acid" includes both polycarboxylic acids and anhydrides thereof.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Except as otherwise indicated, the term "weight percent" or "wt%" refers to the concentration of a component or composition based on the total weight of the composition, expressed as a percentage. Except as otherwise indicated, the term "parts by weight" refers to the concentration of a component or composition based on the total weight of the composition.

Unless otherwise indicated, the term "polymer" includes both homopolymers and copolymers (i.e., polymers of two or more different monomers).

As used herein, the term "pigment volume concentration" (PVC) refers to the ratio of the volume of the pigment or filler particles (i.e. non-binder solids) to the total volume of solids (binder and filler) present in the first coating composition. Where the binder and non-binder solids include multiple components, ideal mixing is assumed and all volumes are additive. The concentration at which the amount of binder present in a composition is just sufficient to wet out the pigment or filler (i.e. fill all the voids between filler or pigment particles) is known as the "critical pigment volume concentration" (CPVC), and represents the physical transition point in a filler-binder system.

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "an" additive can be interpreted to mean that the coating composition includes "one or more" additives.

Also herein, the recitations of numerical ranges by endpoints include all numbers subsumed within that range (e.g., 1 to 5 includes 1, 1.5, 2, 2.75, 3, 3.80, 4, and 5). Furthermore, disclosure of a range includes disclosure of all subranges included within the broader range (e.g., 1 to 5 discloses 1 to 4, 1.5 to 4.5, and 1 to 2).

### DETAILED DESCRIPTION OF PRESENTLY PREFERRED EMBODIMENTS

The embodiments of the present invention described below are not intended to be exhaustive or to limit the invention to the precise forms disclosed in the following detailed description. Rather the embodiments are chosen and described so that others skilled in the art may appreciate and understand the principles and practices of the present invention.

In an embodiment, the coating system of the present invention generally includes a first aqueous composition that is used to form a corrosion resistant primer coating on a substrate. The system optionally and preferably further includes a second aqueous coating composition that is used to form a durable, abrasion resistant topcoat over the first coating.

In an embodiment, the first aqueous coating composition generally includes ingredients comprising at least a first resin component in admixture with in an aqueous carrier. The first aqueous coating composition of the invention may be a single phase solution in which one or more ingredients including at least the first resin component are substantially fully dispersed in the aqueous carrier. Alternatively, the coating compositions may include two or more phases. Compositions including two or more phases may be in the form of dispersions such as a dispersion in which one or more phases are dispersed in a continuous phase of another material and/or phase. Many dispersions are in the form of suspensions including but not limited to colloidal suspensions. In some embodiments, coating compositions are in the form of a latex or emulsion including polymer microparticles dispersed in an aqueous carrier. Some compositions may be water-reducible meaning that the composition remains stable if diluted with additional amounts of water.

In an embodiment, water-reducible compositions use at least one polymer that is capable of being dispersed in water without requiring the use of a separate surfactant, although separate surfactants could be used, if desired. Polymers that can be dispersed in water without requiring a separate surfactant often include pendant ionic functionality and/or hydrophilic chain segments that render corresponding regions of the polymer to be more compatible with water. External acids or bases may be required for anionic stabilization, but such acids and bases usually are different than the emulsifying agents (e.g., surfactants) that are used to disperse a latex polymer.

In an embodiment, the first resin component includes at least one film-forming resin that desirably helps the overlying topcoat adhere better to the underlying substrate and/or in combination with the topcoat provides additional protection for the substrate.

The resin(s) useful in the first resin component may be thermosetting and/or thermoplastic. Conveniently, one or more of these are thermoplastic. Further, some embodiments of a thermoplastic resin useful in the practice of the present invention may be amorphous, crystalline or semicrystalline. Illustrative resins used in the first resin component include acyclic, cyclic, branched, linear, aliphatic, or aromatic resins. Thermoplastic resins desirably have a minimum film-forming temperature (MFFT) that is below 65°C, preferably below 45°C, more preferably below 25°C. It is also desirable that such resins desirably have a minimum film forming temperature that is greater than -50°C, preferably greater than -25°C, more preferably greater than 0°C.

The molecular weight(s) of the one or more resins of the first resin component independently may vary over a wide range. If the molecular weight is too low, then the coating may not be durable enough or may not be resistant to solvent attack. If too high, then the coating may not be easy to apply at sufficient solids level. Balancing such concerns, the number average molecular weight desirably is in the range from 5000 to 75,000, more preferably 10,000 to 50,000, more preferably from: 10,000 to 20,000; and the weight average molecular weight desirably is in the range from 8,000 to 150,000, more preferably 20,000 to 80,000, more preferably 35,000 to 55,000. As used herein, molecular weight refers to the number average molecular weight (Mₙ) unless otherwise expressly noted.

The first resin component includes at least one chlorinated resin derived from one or more reactants, wherein at least one of the reactant(s) is at least partially chlorinated. Chlorinated resins help to provide coatings with excellent corrosion resistance, particularly in marine environments in which substrates protected by the coating system are exposed to solvents, fresh water, and salt water. The Cl substituents of the chlorinated reactant(s) may be attached directly to the reactant backbone by a single bond or via a suitable linking group. In some embodiments, chlorinated reactants may be monomeric, oligomeric, and/or polymeric. In some embodiments, free radically polymerizable functionality may be present.

In addition to one or more chlorinated reactants, one or more additional copolymerizable monomers, oligomers, and/or resins may also be used with the chlorinated resins, if desired. The chlorinated reactant(s) desirably constitute at least 50 weight percent, more preferably at least 70 weight percent, even more preferably at least 85 weight percent, and even up to 100 weight percent of the resultant chlorinated resin(s).

The Cl content of the resultant chlorinated resin can vary over a wide range. In some embodiments, the resin can be partially chlorinated or perchlorinated. If the Cl content is too low, the corrosion protection provided by the resin may be less than is desired. The Cl content can be characterized as the weight percent of Cl included in the chlorinated resin. For higher levels of corrosion protection, it is desirable that a chlorinated resin includes at least 20 weight percent Cl, preferably at least 40 weight percent Cl, and more preferably at least
60 weight percent Cl. Perchlorinated embodiments represent a practical upper limit upon Cl content.

Chlorinated resins of the type described herein may be made by radical polymerization of chlorinated monomers. Chlorinated monomers preferably include, for example, reactants with free radically polymerizable functionality (e.g., carbon-carbon double bonds), and have structures including preferably 2 to 20, more preferably 2 to 10, and most preferably 2 to 4 carbon atoms. Suitable examples include chlorinated ethenes, chlorinated propenes, and combinations of these, such as monochloroethene, 1,1-dicholoro ethane, 1,2-dichloroethene, 1,1,2-trichloroethene, tetrachloroethene, 1-chloropropene, 2-chloropropene, 1,1-dichloropropene, 2,2-dichloropropene, 1,2-dichloropropene, 1,1,1-trichloro-2-propene, 1,1,2-1-propene, 1,2,3-trichloropropene, and combinations of these.

Chlorinated resins of the type described herein also may be made by radical polymerization of chlorinated monomers with monomers or comonomers of ethylenically unsaturated esters, amides, and anhydrides of carboxylic acids. Suitable ethylenically unsaturated comonomers include, for example, (meth)acrylic acid and derivatives such as glycidyl (meth)acrylate, methylaminoethyl (meth)acrylate, t-butylaminoethyl (meth)acrylate, (meth)acrylamide, 4-pentanoguanamine; hydroxylalkyl esters such as hydroxypropyl (meth)acrylate, hydroxyethyl (meth)acrylate, (meth)acrylonitrile, N-alkoxyalkyl amides such as methoxymethyl (meth)acrylamide and butoxy-(methyl) acrylamide; hydroxyalkyl amides such as N-methylol (meth)acrylamide; dicarboxylic acids such as maleic acid; corresponding anhydrides of these (if any); and combinations of these.

Preferred chlorinated resins may be prepared as described in US patents: 4,341,679; 4,401,788; 4,435,478; 4,543,386; and 4,783,499.

In addition to the one or more Cl substituents and free radically polymerizable functionality, the chlorinated reactants used to make chlorinated resins may otherwise be substituted or unsubstituted with additional kinds of functionality, including epoxy-functionality, for example. Such functionality optionally may be used for crosslinking. As an additional option, such functionality may be used to provide the resin with integral dispersing functionality. Some substituents may be co-members of a ring structure. Examples of other substituents include hydroxyl, thiol, amino, amide, isocyanate, nitrile, carboxy, sulfate, sulfite, fatty acid, epoxide, and combinations of these groups.

The composition may also contain one or more other types of free-radical addition polymers (e.g. produced by the free-radical addition polymerization or copolymerization in aqueous emulsion of one or more monomers such as vinylidene chloride, alkyl (meth)acrylates having 1 to 12 carbon atoms in the alkyl group, alkoxyalkyl (meth)acrylates having 1 to 12 carbon atoms in the alkyl group, styrene, (meth)acrylonitrile, allyloxy groups, cyanate ester groups, vinyl acetate, vinyl ether groups, vinyl chloride, ethylene, cis- and trans-1,3-butadiene, cis- and trans-isoprene, cis- and trans-chloroprene, 1-decene, 1-pentene and 1-octene, and combinations of these.

Free radically polymerizable functionality is conveniently reacted by exposing the reactants to a suitable source of curing energy, often in the presence of agents (e.g., initiators)
that help promote the desired reaction. The energy source used for achieving polymerization and/or crosslinking of the curable functionality may be actinic (e.g., radiation having a wavelength in the ultraviolet or visible region of the spectrum), accelerated particles (e.g., electron beam radiation), or thermal (e.g., heat or infrared radiation).

A particularly preferred chlorinated resin is polyvinylidene chloride (PVDC). As used herein, polyvinylidene chloride refers to a resin in which 1,1-dichloroethene constitutes at least 40 weight percent, optionally at least 60 weight percent, further optionally at least 75 weight percent, further optionally at least 90 weight percent, and further optionally even up to 100 percent by weight of the reactants used to make the resin. A wide range of suitable embodiments of polyvinylidene chloride resins are available from commercial sources. Examples of commercially available embodiments include those available under the trade designations DIOFAN (available from Dow Chemical and/or Solvay Plastics), POLIDENE (e.g., 33-082, 33-038, 33-086, 33-083, 33-075, and 33-081 available from Scott Bader), HALOFLEX (e.g., 202 and 202S available from DSM Neoresins). PERMAX (e.g., 803 and 805 available from Lubrizol), other commercially available resins, and combinations of these.

. In an aspect, PVDC or other commercially available chlorinated resins may be modified with specific functionality, such as epoxy-functionality, for example.

The amount of first resin component in the first aqueous coating composition may be selected from a wide range. Generally, if the amount of resin component is too low, then it may be difficult to form a film, more difficult to form a film that has sufficient adhesion to the substrate, and/or the film may have insufficient corrosion resistance or other performance.

If too much is used, then it may be harder to formulate a pigmented system or it may be more difficult to make a material that can be applied to the substrate. Balancing such concerns, the first aqueous coating composition preferably includes from 10 to 70 weight percent, more preferably 15 to 50 weight percent, and most preferably 20 to 40 weight percent of the first resin component based on the total weight of the aqueous coating composition.

The first resin component preferably includes at least 50 weight percent, more preferably 50 to 75 weight percent, and most preferably 75 to 100 weight percent of a chlorinated resin, such as PVDC, for example.

In addition to the chlorinated resin(s), the first aqueous coating composition optionally may include one or more other kinds of resin components. Preferably, these are hydrophobic and substantially miscible with chlorinated resins so that any undesirable amounts of phase separation among resins is substantially avoided. Exemplary resins include epoxies, polyurethanes, polyamides, polyimides, halogenated polymers, polysilicones, polyesters, polyolefins, (meth)acrylic resins, and combinations of these. Acrylic latex emulsions are preferred, including, for example, polyurethane dispersions (PUD), all-acrylic emulsions, styrene-acrylic emulsions, and acrylic-modified alkyd resin dispersions. In an aspect, styrene-acrylic emulsions are preferred. The amount of these resins may be selected from a wide range, balancing concerns of compatibility with the chlorinated resin component against performance of the coating, in terms of corrosion resistance and heat resistance. In a preferred aspect, the first aqueous coating composition includes up to 50 wt%, preferably 5 to 50 wt%, more preferably 15 to 40 wt%, and most preferably 20 to 30 wt% of acrylic latex emulsion, based on the total weight of resin components in the first aqueous coating composition.

The first resin component is in admixture with an aqueous carrier. As used herein, "aqueous" means that at least: 5 weight percent, preferably at least 20 weight percent, more preferably at least 40 weight percent, and even more preferably at least 60 weight percent, and even 90 weight percent or more of the carrier is water, based upon the total weight of the carrier. Most preferably, from: 85 to 100 weight percent, more preferably 95 to 99 weight percent of the carrier is water.

In addition to water, the aqueous carrier of the first aqueous coating composition optionally may include one or more additional, optional co-carriers. Co-carrier(s) may be used for a variety of purposes, including helping in film formation and/or paint stability. Examples of suitable co-carriers include butyl cellosolve, alcohol(s), such as butanol, coalescing agents (e.g., ester alcohol(s), such as the Eastman Texanol product and/or low VOC coalescents such as are described in U.S. Pat. Nos. 6,762,230 and 7,812,079), glycol ether(s), and combinations of these.

Desirably, so-called VOC-exempt co-carrier(s) are preferred.

The amount of co-carrier included in the first aqueous coating composition can vary over a wide range. The amount(s) to use will depend on factors including the type of co-carrier, the purpose for which the co-carrier is being added, and the coating technique(s) that might be used to apply the first aqueous coating composition onto a substrate. In illustrative embodiments, the first aqueous coating composition may include from 0.3 to 80 weight percent, desirably 0.3 to 15 weight percent, more desirably 1 to 5 weight percent of co-carrier(s) based on the total weight of co-carrier and water included in the composition.

As supplied, many water-based PVDC resin compositions tend to be strongly acidic, often having a pH of 2 or less, even 1 or less. In a strongly acidic, aqueous environment, chlorinated resins tend to dehydrochlorinate, leading to undesirable resin degradation. Without being bound by theory, it is believed that allylic double bonds are formed in the chlorinated resin as a consequence of dehydrochlorination. These allylic double bonds are sites at which the resin backbone breaks down. In addition, these double bonds may active adjacent chlorinated sites, making these sites prone to dehydrochlorination. The degradation process is self-catalytic, as dehydrochlorination produces HCl which further catalyzes dehydrochlorination of the resin. The self-catalyzed degradation of the chlorinated resin produces strands of conjugated double bonds. Conjugated double bonds are chromophoric, and therefore, degradation of the resin is evidenced by a color change, i.e. yellowing or darkening of the resin. In addition, degradation may also cause loss of adhesion in a coating made from the resin, and embrittlement of the resin due to Diels-Alder crosslinking of the conjugated double bonds.

In a preferred aspect, the first resin component, such as aqueous PVDC, for example, is treated to raise the pH to make the composition less acidic, thereby reducing degradation associated with dehydrochlorination of the resin. Because dehydrochlorination is substantially reduced or inhibited in less acidic conditions, raising the pH of the chlorinated resin component improves the heat stability of the resin, and shelf-life is also improved. Because degradation is reduced, performance properties of the resultant coatings are improved, including improved adhesion, and greater resistance to blistering.

Adjusting the pH of the water-based resin environment also eases compatibility concerns with other ingredients that might be used in the first aqueous coating composition. Generally, coating constituents tend to be more compatible at similar pH values. Ingredients with similar pH are more easily blended into coating formulations with less risk that the components will unduly react and/or be too difficult to blend together into mixtures with rheology characteristics suitable for coating applications. Many ingredients known to be useful in coating applications tend to have pH characteristics that are mildly acidic, neutral, or mildly alkaline. Consequently, as an additional benefit, raising the pH enhances the compatibility of the chlorinated resin with many other ingredients. For example, raising the pH of the chlorinated resin environment enhances compatibility of the resin with epoxy-functional compounds that can act as HCl and/or tertiary Cl scavengers, as further described below. Accordingly, it is desirable in many embodiments to at least partially adjust the pH of at least a portion of the PVDC resin composition before the composition or portion thereof is combined with some or all of the other coating composition constituents.

As still another benefit, raising the pH of the chlorinated resin composition also is believed to reduce undesirable interactions that might occur between the resin and underlying metal substrates. Without being bound by theory, it is believed that more acidic coating, particularly when wet as first applied, can etch or otherwise interact with metal surfaces. This interaction may tend to cause metal constituents such as Fe ions from the surface to migrate, diffuse, or otherwise be transported into the wet coating. In the coating, the metal constituents may catalyze or otherwise promote degradation of the chlorinated resin. Raising the pH, therefore, also helps to reduce degradation by reducing resin interaction with the substrate in a way that catalyzes degradation.

In an aspect, the pH desirably is increased to a value in the range from 3 to 8, preferably 4 to 7, more preferably 4 to 6. The pH is readily adjusted by contacting the chlorinated resin composition with one or more bases under conditions effective to achieve the desired pH. Suitable bases include, for example, one or more of ammonia, amines, hydroxides (such as KOH, for example), and combinations of these. Where an epoxy-functional material is included in the coating composition, and the composition is to be stored for extended periods of time, other bases may be preferred, as ammonia or amines tend to react with epoxy over time and cause crosslinking of the epoxy material. On the other hand, if the coating composition will be used relatively promptly after the introduction of the epoxy-functional material into the composition, crosslinking of the epoxy resin induced by reaction with ammonia or amine may be beneficial, as the resultant coating would show enhanced durability, toughness and adhesion.

In addition to the first resin component, the aqueous carrier, and optional co-carrier, one or more additional ingredients optionally may be included in the first aqueous coating composition. When choosing additional ingredients, it is desirable to make selections that minimize a risk of degrading the chlorinated resin(s). For example, it has been common in some conventional PVDC-based coating compositions to include Zn containing ingredients. Examples of these include zinc, zinc salts, and/or zinc oxide. Such Zn-containing ingredients can provide many benefits. These benefits allegedly include corrosion resistance, or protection against flash rusting.

Such compositions can, however, contribute to degradation of chlorinated resins, particularly at elevated temperatures above 140°F (60°C). Without wishing to be bound by theory, it is believed that this degradation mav occur because certain metals and metal-containing species such as, for example, zinc, iron, and tin, are capable of catalyzing the dehydrochlorination of the chlorinated resin when the resin is exposed to higher temperatures. The degradation can reduce the qualitv of the resultant coating and may be a contributor toward problems such as blistering, peeling, and cracking.

In some embodiments in which catalytically active metals or metal-containing species (e.g., Zn or Zn-containing species) may be present in the first aqueous coating composition, from various sources including additives such as, for example, flash rust inhibitors, fillers., and pigments, using mixed metals can reduce the catalytic activity and help to stabilize the compositions. For example, mixed metal stabilization may occur in systems including combinations of barium/zinc, calcium/zinc , and barium/calcium/zinc. In an aspect, when stabilized by a mixed metal system, the first aqueous coating composition preferably contains about 25 wt% Zn, more preferably 10 wt% to 20 wt% Zn, and most preferably 5 wt% to 15 wt% Zn.

In some embodiments, certain forms of catalytic metals or catalytic metal-containing species may be passivated or encapsulated such that catalytic dechlorination of the resin by the metal is prevented or significantly reduced. Such species can be included in the first aqueous composition without causing significant dechlorination. Suitable species include
certain Zn salts, including soluble such as Zn(NO₃)₂, and ZnSO₄, for example. In an aspect, when present in the first aqueous coating composition, the Zn-containing species is present at preferably 2 wt% to 15 wt%, more preferably at 2 wt% to 10 wt%, and most preferably at 2 wt% to 5 wt%.

Even with the potential for stabilization and/or passivation, it is desirable in some embodiments to limit or even at least substantially exclude ingredients from the first aqueous coating composition that might include metals such as zinc that could be catalytically active with respect to degradation of chlorinated resins, i.e. to have a first aqueous coating composition that is substantially free of Zn or Zn-containing species. Excluding such catalytically active metals or other metal-containing species is particularly desirable if the resultant coating is expected to be exposed to higher temperatures in the course of its service life, as the metals tend to be more active at higher temperatures. Indeed, it has been observed that excluding zinc and zinc-containing compositions from the first aqueous coating composition greatly improves heat resistance of PVDC resin material(s) and dramatically reduces tendencies of the resultant coatings to blister, peel, and crack. Accordingly, because some metals such as Zn and other Zn-containing species, for example, can promote degradation of chlorinated resins at elevated temperatures, it may be desirable to select ingredients that have a minimal amount, if any, of catalytically active metal contaminants, particularly when heat resistance is desired. In an aspect, where heat resistance is desired, the first aqueous coating composition preferably contains no more than 10 wt% Zn, more preferably no more than 7 wt% Zn, and most preferably no more than 5 wt% Zn.

With these selection principles in mind, degradation of chlorinated resins in the first aqueous composition may be reduced or prevented by incorporating one or more pH-stabilizing or heat-stabilizing additives into the first aqueous composition. Suitable additives include one or more chlorine scavengers. These compounds beneficially scavenge free HCl and tertiary Cl to inhibit further degradation of the chlorinated resin. Once HCl is scavenged, it is not available to further acidify the environment, and therefore, the resin environment becomes pH-stabilized. Suitable scavengers include, for example, metal organocarboxylates, diorganotin mercaptides, dibutyl tin dilaurate, dibutyltin maleate, amines including hydroxy amines, ammonium salts, amino acids (preferably not including lysine), benzoate, 2-ethyl hexanoate esters, soaps of fatty acids, polyamino acids, polyolefin imines, polyamines, polyamine amides, polyacrylamide, epoxy-functional molecules, metal salts of a weak inorganic acid, such as tetrasodium pyrophosphate, hydrotalcite, and combinations of these.

Desirably, HCl and tertiary chlorine scavengers in the form of catalytically active metals such as Zn or Fe, or metal ions and salts thereof, are at least substantially excluded from the first aqueous coating composition. Although such materials can scavenge HCl or tertiary Cl, they may also pose an undue risk of catalyzing degradation of the chlorinated resin.

Suitable scavenging and/or heat-stabilizing additives include, for example, epoxy resins, dienophiles, organosulfur compounds, isocyanate derivatives, amine compounds, antioxidants, flash rust inhibitors, and metal chelating compounds. Epoxy-functional materials, antioxidants and flash rust inhibitors are particularly preferred additives for the first aqueous coating composition.

Epoxy-functional additives are particularly preferred HCl scavengers, and include alkyl and aromatic epoxy resins or epoxy-functional resins, such as for example, epoxy novolac resin(s) and other epoxy resin derivatives, which can act as Cl scavengers and/or acid by-product scavengers. This helps to protect the integrity of the coating and the underlying substrate in the event that some degradation of the chlorinated resin was to occur. Epoxy-functional molecules include preferably at least one, more preferably two or more pendant epoxy moieties. The molecules can be aliphatic or aromatic, linear, branched, cyclic or acyclic. If cyclic structures are present, these optionally may be linked to other cyclic structures by single bonds, linking moieties, bridge structures, and pyro moieties. Cyclic moieties may be fused in some embodiments. Epoxidized vegetable oils may also be used.

Examples of suitable epoxy functional resins are commercially available and include Ancarez™ AR555 (Air Products), Ancarez™ AR550. Epi-rez™3510-W-60, Epi-rez™ 3515-W-60 Epi-rez™, or 3522-W-60 (Hexion), and combinations of these. In an aspect, the epoxy-functional scavenger have an epoxy equivalent weight of from 50 to 5000, preferably 75 to 2000, more preferably 100 to 800 g/eq, in accordance with ASTM D1652 (Standard Method for Epoxy Content).

In an aspect, where included in the first aqueous composition, the epoxy-functional resin is present at preferably 0.1 part by weight to 30 parts by weight, more preferably
2 parts by weight to 7 parts by weight, and most preferably from 3 parts by weight to 5 parts by weight. In an aspect, the epoxy-functional resin has a viscosity at 25°C of 100 to 20,000 cP, preferably 8000 to 18,000 cP, more preferably 500 to 5000 cP, and most preferably 120 to 180 cP. (1 cP = 1 mPa·s).

Suitable organosulfur compounds include those compounds capable of stabilizing PVDC resin by addition across the double bond formed on degradation of the chlorinated resin. Exemplary organosulfur compounds are thiols, and thioquinones. Suitable thiols include, for example, thiosalicylic acid, mercaptophenol, mercaptosuccinic acid, and cysteine.

Suitable thioquinones include, for example, thiol-substituted benzoquinones or p-benzoquinone (pBQ) derivatives, such as pBQ-mercaptophenol, pBQ-mercaptosuccinic acid, pBQ-cysteine, and pBQ-thiosalicylic acid. In an aspect, where included in the first aqueous composition, the organosulfur compound is present at preferably 0.05 to 2 wt%, more preferably 0.02 to 1.5 wt%, and most preferably 0.01 wt% to 1 wt%. The pBQ derivatives at a concentration of 0.2 wt% are preferred.

Suitable antioxidants include compounds capable of inhibiting oxidation and/or degradation of the chlorinated resin component of the first aqueous coating composition. Examples include hydroxy-functional compounds, preferably alkyl- or aryl-substituted alcohols or phenols and derivates thereof, and quinone compounds and derivatives thereof. Specific examples include butylated hydroxy toluene, 4-tert-butyl catechol, triphenyl phosphite, hydroquinone, and p-benzoquinone. In an aspect, where included in the first aqueous composition, the antioxidant is present at preferably 0.005 to 10 wt%, more preferably 0.02 to 5 wt%, and most preferably 0.01 to 3 wt%. In an aspect, triphenyl phosphite, at concentrations of 1% to 5%, is preferred.

Without being bound to theory, the HCl formed by dechlorination of the PVDC-based resin may react with the iron in the metal substrate to form iron chloride, a Lewis acid that promotes corrosion. Suitable flash rust inhibitors are compounds that may passivate the surface of the substrate and thereby reduce or prevent the reaction of HCl with iron. Other suitable environmentally friendly materials include: borosilicates, silicates, titanates, phosphosilicates, phosphates, triphosphates, and hydrogen phosphates of ammonia, barium, calcium, aluminum, zinc or strontium, and mixtures thereof. In an aspect, where included in the first aqueous composition, the flash rust inhibitor is present at preferably 0.005 to 10 wt%, more preferably 0.02 to 5 wt%, and most preferably 0.01 to 3 wt%. In a preferred aspect, hydrogen phosphates and/or dihydrogen phosphates as concentrations of about 1 wt% are used.

In an embodiment, the first aqueous coating composition incorporates one or more anticorrosive agents into the composition to help further protect the underlying substrate and the resultant coating(s) against corrosion. When heat resistance is desired, the anticorrosive agent(s) should be selected in a way so that significant quantities of catalytically active metals are excluded (or otherwise passivated) that would have a tendency to help cause degradation of the chlorinated resin. For example, some commercially available aluminum triphosphate materials often are blended with zinc oxide, while other aluminum triphosphate materials are generally substantially zinc free. If the coating is likely to see high temperatures, then aluminum triphosphate that is substantially free of catalytically active metals, such as Zn, for example, should preferably be used. Examples of suitable anticorrosive agents include:
borosilicates and/or phosphosilicates of barium, calcium or strontium, calcium titanate, calcium silicate (e.g., calcium ion-exchanged amorphous silica), condensed calcium phosphate, calcium hydrogen phosphate, aluminum phosphate, aluminum triphosphate, and mixtures of the above.

Aluminum triphosphate is presently preferred. A wide variety of such agents are commercially available. One commercially available example is available under the trade designation SHEILDEX AC-5 from Grace Davison.

Blended anticorrosive agents, such as aluminum triphosphate that contains zinc oxide or other zinc species, for example, may be acceptable for use in the first aqueous composition for applications in which the resultant coating is not likely to see relatively high temperatures during service life. For example, when used with a highly infrared-reflective (IR-reflective) topcoat composition, the first aqueous coating composition is unlikely to reach temperatures of greater than 140°F (60°C) and blended zinc-containing anticorrosive agents can be used without undue concern over degradation of the chlorinated resin. Examples of Zn-containing anticorrosive agents that can be used alone or as part of a blend with other agents such as aluminum triphosphate include zinc phosphate, zinc phosphate hydrate, zinc aluminum phosphate, strontium zinc phosphosilicate, and mixtures thereof.

The amount of anticorrosive agents used may vary over a wide range. If too little is used, the corrosion protection may be less than might be desired. Using too much may not provide meaningful additional protection as compared to using lesser amounts. In an aspect, where included in the first aqueous composition, the anticorrosive agent is present at preferably
0.1 to 10 wt%, more preferably 0.5 to 7 wt%, and most preferably 2 to 6 wt%.

The first aqueous coating composition includes a sufficient amount of one or more fillers, extenders or pigments (hereinafter "fillers") to further improve corrosion protection, and/or provide optimal permeability through the coating once applied on the metal substrate. Additionally, the fillers may be used as thickeners, to help reduce foaming and to help improve sag resistance of the coating composition.

Without being bound to theory, it is believed that specific properties of the filler, including oil absorptivity, particle shape, particle size, aspect ratio, porosity, surface treatment, and ion effects, may contribute to the corrosion resistance of the coating. Surface active agents in the first coating composition and resin concentration may also impact selection of an appropriate filler or mixture of fillers.

Suitable fillers for use with the first aqueous coating composition include, insoluble compounds of one or more of Be, Mg, Ca, Sr, Ba, Al, Ti, transition metals, lanthanide metals, actinide metals, Si, Ge, Ga, Sn, Pb, and combinations or mixtures of these. Insoluble compounds include sulfates, hydroxides, carbides, nitrides, oxides, oxynitrides, oxycarbides, silicates, and/or carbonates. Specific embodiments of such fillers include talc, CaCO₃, BaSO₄, aluminum silicate; aluminum hydroxide, mica, silica (as glass beads, for example), wollastonite, china clay, chlorite, dolomite, and mixtures or combinations of the above. BaSO₄, CaCO₃, dolomite and wollastonite are preferred. In an aspect, the first aqueous coating composition includes a mixture of two or more fillers.

In an aspect, the fillers used with the first aqueous coating composition include non-platelet-shaped (e.g., nodular, acicular, spherical) particles, and platelet-shaped (e.g., platy, lamellar) particles. Exemplary pigments with platelet-shaped particles include
mica, talc, chlorite, and mixtures thereof. Exemplary pigments with non-platelet-shaped particles include insoluble sulfates, carbides, nitrides, oxynitrides, oxycarbides, oxides, and/or carbonates of Be, Mg, Ca, Sr, Ba, Al, Ti, transition metals, lanthanide series metals, actinide series metals, Si, Ge, Ga, Al, Sn, Pb, and combinations thereof.

In an embodiment, suitable fillers are selected based on oil absorptivity. In a preferred aspect, the first aqueous coating composition includes a suitable filler, or combination of two or more fillers, having oil absorptivity of no more than 50 g of oil per 100 g total weight, preferably 5 to 40 g/100g, more preferably 10 to 30 g/100g, and most preferably 15 to 20 g/100g, as measured according to ASTM D281 (standard test method for oil absorption of pigment by spatula rub-out).

In an embodiment, suitable fillers are selected based on the aspect ratio of filler particles. Without being bound to theory, it is believed that a lower aspect ratio provides excellent corrosion protection and adhesion to the metal substrate. Without being bound by theory, the aspect ratio of a particular filler may contribute to the oil absorptivity of the filler, i.e.
a filler with a lower aspect ratio may demonstrate lower oil absorptivity. Oil absorptivity may also be influenced by particle size and/or any parameter that affects the surface area of the filler particles.

In an aspect, fillers with non-platelet-shaped particles may be used in combination with fillers with platelet-shaped particles. The weight ratio of non-platelet-shaped to non-platelet shaped pigments can vary over a wide range. In illustrative embodiments, this ratio may be in the range from 1:50 to 50:1, preferably 1:10 to 10:1; more preferably 1:3 to 3:1. For example, one embodiment of the first aqueous coating composition includes about 14.5 weight percent of relatively rounded BaSO₄ particles and about 14.5 percent by weight of platelet-shaped mica particles based on the total weight of the coating solids.

In an embodiment, the first aqueous composition includes a sufficient amount of filler particles, such that a coating prepared from the first coating composition includes from I to 40 vol%, preferably 5 to 30 vol%, and more preferably 10 to 25 vol%, based on the total volume of the dried coating, or pigment (i.e. filler) volume concentration (PVC). Without being bound to theory, it is believed that pigment volume concentration plays an important role in the corrosion resistance of the first aqueous coating composition. At optimal pigment volume concentration, the filler particles may alter the surface energy of the first aqueous coating composition in a manner that affects water vapor transmission, surfactant migration and corrosion resistance of a film of the first coating composition formed on a substrate.

A variety of other additional ingredients may be included in the first aqueous coating composition, including for example, defoaming aids, grinding aids, wetting agents, surfactants, coalescing aids, processing aids, coloring agents, thickeners, sag resistant agents, and combinations of these. These ingredients are used in accordance with conventional practices currently known or hereafter developed.

In an embodiment, the first aqueous coating composition includes one or more rheology additives capable of preventing sag of a primer coating formed from the first aqueous composition when applied to a substrate at high wet film thicknesses prior to being dried. Without being bound to theory, selection of the rheological additive requires balancing low viscosities at high shear rates (e.g., during airless application) with rapid recovery of viscosity at low shear rates (e.g., during the flash-off period). In conditions of high humidity, the film stays wet for a longer period of time, resulting in increased sag if the viscosity does not recover within the same time period. In a preferred aspect, the first aqueous coating composition includes a rheology additive that increases sag resistance.

Typical sag resistance additives include organic associative thickeners, such as hydrophobically modified cellulosics, urethanes, and alkali swellable emulsions, for example; and non-associative thickeners such as high molecular weight cellulosics and alkali swellable emulsions. The non-associative thickeners provide good sag resistance but result in higher viscosities at high shear rates, which can have a negative impact on film build control and sprayability. Associative thickeners produce better sag and application properties than the non-associative types, but in high humidity environments, the drying time is increased and results in decreased sag resistance. The sag problem may be overcome by adding more of the rheology additive, but the cured film can begin to display mud cracking defects.

In an embodiment, an inorganic additive is included in the first aqueous coating composition to provide optimal sag resistance in a humid environment. Without being bound to theory, the inorganic additives function by building a reversible network throughout the coating, allowing for rapid build in viscosity while maintaining low viscosities during application. The rapid network formation is driven by ionic interactions and hydrogen bonding between the inorganic thickeners, and as the network forms much faster than with other additives, there is less sensitivity to humid environments.

Exemplary inorganic rheology agents include inorganic clays (e.g., phyllosilicate of Ca, K, Na or Al), and fumed silica. In an aspect, various types of BENTONE rheology additives are preferred for use in the first aqueous coating composition. In illustrative embodiment, the rheology additive is present at preferably 0.05 to 2 wt%, more preferably 0.02 to 1.5 wt%, and most preferably 0.01 to 1 wt%.

The first aqueous coating composition of the present invention may be used to form primer coatings having a wide range of thicknesses. In illustrative embodiments, primer coatings have a dry film thickness in the range from 20 micrometers to 200 micrometers, preferably
25 micrometers to 120 micrometers, more preferably 50 micrometers to 60 micrometers.

A wide range of techniques may be used to prepare the first aqueous coating composition from the desired ingredients. According to an illustrative technique, the first resin component is reserved while the other ingredients are combined and mixed until homogeneous. Then, the reserved first resin is added to the admixture with further mixing until homogeneous.

In addition to the first aqueous coating composition, coating systems of the present invention further include at least a second aqueous coating composition, or a second coating composition, as described in claim 1. Significantly, the second aqueous coating composition preferably comprises water-based topcoatings with enhanced compatibility for underlying basecoatings incorporating chlorinated resins, i.e. the first aqueous coating composition. When these second aqueous coating compositions are applied onto underlying coatings incorporating chlorinated resin(s), for instance, the coating system described herein show minimal blistering and peeling, along with great durability and adhesion.

The second aqueous coating composition may be a single phase solution in which one or more ingredients including at least the second resin component are substantially fully dispersed in the aqueous carrier. Alternatively, the coating compositions may include two or more phases. Compositions including two or more phases may be in the form of dispersions such as a dispersion in which one or more phases are dispersed in a continuous phase of another material and/or phase. Many dispersions are in the form of suspensions including colloidal suspensions. In some embodiments, coating compositions are in the form of a latex or emulsion including polymer microparticles dispersed in an aqueous carrier. Some compositions may be water-reducible.

The second aqueous coating composition preferably includes at least one resin that includes acid functionality (or a salt and/or ester thereof) in combination with one or more pigments, fillers, or extenders (hereinafter "pigments") that cumulatively are present in significant amounts as described further below.

Suitable resin(s) for use in the second aqueous composition may be acyclic, cyclic, branched, linear, aliphatic, or aromatic. Desirably, the at least one resin used in the second aqueous coating composition is a film forming resin either on its own or in combination with another feature such as coalescing aid(s) and/or heat.

In an aspect, the resin component of the second aqueous composition is preferably capable of reaction or cure at temperatures below 200°F (93°C) to ensure compatibility with the underlying first aqueous coating composition, and to minimize adverse impact on the first aqueous coating composition. In an aspect, the second aqueous coating composition is preferably a one-component (1K) thermoplastic, or a two-component (2K) reactive cure system. Examples of 1K aqueous systems include latex emulsions as described below, water-based fluorpolymers, polyurethane dispersions (PUDs), and water-reducible oxidizing alkyds. Particular systems for use as the second aqueous coating composition are chosen based on the final film properties and on exterior durability requirements for the ultimate coating. Examples of 2K reactive cure systems include water-borne acrylic resins that can be cured with water-dispersible isocyanates, polyaziridines, polycarbodiimides, and acetoacetyl-functional systems. Additional water-based resins that can be cured with dispersible isocyanates include polyesters, polyethers, and alkyds. Water-based radiation curable coatings that incorporate acrylate and methacrylate functionality with epoxies, urethanes, polyesters, and polyethers could find utility with this type of system described within. For use as topcoats over the first aqueous coating, 2K aqueous systems are generally preferred, as they provide better performance, greater durability and higher gloss than 1K systems.

In some embodiments, a solvent-based topcoat may be applied over the primer coat made from the first aqueous coating composition. The term "solvent-based", as used herein, refers a composition where one or more components are dissolved or dispersed in a non-aqueous carrier or solvent. Solvent-based topcoat compositions tend to be 2K reactive systems with high solids content. Suitable resin systems include, for example, polyesters, polyurethanes, polyacrylics, oxidizing alkyds, silicones, and fluorinated resins, which can be employed as topcoat compositions in combination with one or more pigments. Solvent-based topcoats may also include resin systems cured with isocyanate functional materials to minimize heat exposure of the first aqueous composition. Radiation-curable compositions may also be used as solvent-borne topcoat systems.

In a preferred aspect, the resin(s) for use in the second aqueous coating composition include acid functionality. The acid functionality of the resin(s) may be pendant directly from the polymer backbone or may be linked to the backbone by a suitable linking group. Examples of suitable acid functionality include carboxylic acid, sulfonic acid, phosphonic acid, and combinations of these. A wide variety of counter cations may be used in those embodiments in which the acid group is supplied as a salt. Examples of such cations include Na⁺, Li⁺, NH4⁺, K⁺, and combinations of these. In preferred embodiments, the acid functionality includes -C(O)ONH⁺. Advantageously, when coating compositions including these moieties dry, the dried coatings release ammonia, leaving -C(O)OH functionality in the dried coating.

In exemplary embodiments, a suitable resin for use in the second aqueous coating composition is a copolymer derived from reactants including (a) optionally at least one aromatic reactant including pendant free radically polymerizable functionality; (b) at least one free radically polymerizable reactant having pendant acid functionality (or a salt or ester thereof); and (c) optionally at least one other copolymerizable reactant with free radically polymerizable functionality. Such reactants often are monomers, oligomers, and/or resins.

Examples of reactant (a) include styrene, alpha-methyl styrene, t-butyl styrene, 1,3-diisopropenylbenzene, 2,4,6-trimethylstyrene, 2,4-dimethylstyrene, 2,4-diphenyl-4-methyl-1-pentene, 2,5-dimethylstyrene, 2-vinylnaphthalene, 3-methylstyrene, 4-benzyloxy-3-methoxystyrene, 9-vinylanthracene, a,2-dimethylstyrene, and combinations of these.

These may be substituted or unsubstituted. Illustrative embodiments of the resin include preferably from 10 to 70 parts by weight of reactant(s) (a) per 100 parts by weight of the total reactants used to form the resin.

Examples of reactant (b) include, unsaturated or other free radically polymerizable acids. In many embodiments, reactant (b) is provided by one or more carboxylic acids or anhydrides thereof having one or more acid groups. Examples include
(meth)acrylic acid, sorbic acid, maleic anhydride, maleic acid, crotonic acid, itaconic acid, palmitoleic acid, oleic acid, linoleic acid, arachidonic acid, benzoic acid, fumaric acid, and combinations of these. Illustrative embodiments of the resin include preferably from 2 to 20 parts by weight of reactant(s) (b) per 100 parts by weight of the total reactants used to form the resin. Preferably, the acid functionality is atypically high in that the one or more acid functional reactants incorporated into the resin are at least 3 weight percent, at least 4 weight percent, at least 5 weight percent, and up to 10, 15, or 20 weight percent of total weight of all reactants used to make the resin.

Examples of reactant (c) include vinyl esters, vinyl ethers, lactams such as N-vinyl-2-pyrrolidone, (meth)acrylamide, N-substituted (meth)acrylamide, octyl (meth)acrylate, nonylphenol ethoxylate (meth)acrylate, isononyl (meth)acrylate, 1,6-hexanediol (meth)acrylate, isobornyl (meth)acrylate, 2-(2-ethoxyethoxy)ethyl (meth)acrylate, 2-ethylhexyl (meth)acrylate, lauryl (meth)acrylate, beta-rarboxycthyl (meth)acrylate, butyl (meth)acrylate; isobutyl (meth)acrylate, cycloaliphatic epoxide, alpha-epoxide, 2-hydroxyethyl (meth)acrylate, (meth)acrylonitrile, maleic anhydride, itaconic acid, isodecyl (meth)acrylate, dodecyl (meth)acrylate, n-butyl (meth)acrylate, methyl (meth)acrylate, hexyl (meth)acrylate, (meth)acrylic acid, N-vinylcaprolactam, stearyl (meth)acrylate, hydroxy functional caprolactone ester (meth)acrylate, octodecyl (meth)acrylate, isooctyl (meth)acrylate, hydroxyethyl (meth)acrylate, hydroxymethyl (meth)acrylate, hydroxypropyl (meth)acrylate, hydroxyisopropyl (meth)acrylate, hydroxybutyl (meth)acrylate, hydroxyisobutyl (meth)acrylate, tetrahydrofurfuryl (meth)acrylate, and combinations of these. Illustrative embodiments of the resin include preferably from 10 to 80 parts by weight of reactant(s) (c) per 100 parts by weight of the total reactants used to form the resin.

The resins useful in the second aqueous compositions may be polymerized from the constituent reactants using a variety of suitable polymerization techniques that are currently known or hereafter developed. Suitable such techniques are further described in U.S. Pat. Pub. No. 2007/0110981 A1 (dated 17 May 2010).

In some embodiments, the second aqueous composition is in the form of a latex composition. The latex composition may comprise single stage and/or multistage latex polymers. Preferred single-stage latex polymers have a glass transition temperature (T_{g}) of at least -5°C, more preferably at least 15°C, and most preferably at least 25°C, and optimally at least 30°C. Preferred single-stage latex polymers for use have a T_{g} of less than 75°C, more preferably less than 65°C, and most preferably less than 55°C. T_{g} may be determined in the practice of the present invention using differential scanning calorimetry (DSC) techniques.

Preferred multistage latex polymers have between 10 and 50 wt. % higher T_{g} monomers and between 50 and 90 wt. % of lower T_{g} segments. The higher T_{g} segment preferably has a T_{g} between 35 and 70°C, more preferably between 35 and 130°C and the lower T_{g} segment preferably has a T_{g} up to 30°C.

It may also be advantageous to use a gradient T_{g} latex polymer made using continuously varying monomer feeds. The resulting polymer will typically have a DSC curve that exhibits no T_{g} inflection points, and could be said to have an essentially infinite number of T_{g} stages. For example, one may start with a high T_{g} monomer feed and then at a certain point in the polymerization start to feed a low T_{g} monomer composition into the high T_{g} monomer feed. The resulting multistage latex polymer will have a gradient T_{g} from high to low. In other embodiments, it may be favorable to feed a high T_{g} monomer composition into a low T_{g} monomer composition. A gradient T_{g} polymer may also be used in conjunction with multiple T_{g} polymers.

In addition to the resin(s) with free radically polymerizable functionality as described herein, the second resin component optionally may include one or more other kinds of resin components. Examples of other resins include polyurethanes, polyamides, polyimides, halogenated polymers, polysilicones, polyesters, alkyds, polyolefins, and combinations of these.

The amount of second resin component in the second aqueous coating composition may be selected from a wide range. Generally, if the amount of resin component is too low, then it may be difficult to form a film, more difficult to form a film that has sufficient adhesion to the substrate, and/or the film may have insufficient corrosion resistance or other performance.

If too much is used, then it may be harder to formulate a pigmented system or it may be more difficult to make a material that can be applied to the substrate. Balancing such concerns, the second aqueous coating composition preferably includes from 10 to 70 weight percent, more preferably 15 to 50 weight percent, and most preferably 20 to 40 weight percent of the second resin component based on the total weight of the aqueous coating composition.

The second resin component is in admixture with an aqueous fluid carrier, wherein "aqueous" is as defined above with respect to the aqueous carrier used in the second aqueous coating composition. In addition to water, the aqueous carrier of the second aqueous coating composition optionally may include one or more additional, optional co-carriers. Co-carrier(s) may be used for a variety of purposes, including helping in film formation and/or paint stability. Examples of co-carriers include butyl cellulose, alcohol(s), such as butanol, coalescents (e.g., conventional ester alcohol(s), such as the Eastman Texanol product and/or low VOC coalescents such as are described in U.S. Pat. No. 6,762,230), glycol ether(s), and combinations of these.

Desirably, so-called VOC-exempt co-solvent(s) are preferred.

The amount of co-carrier included in the second aqueous coating composition can vary over a wide range. The amount(s) to use will depend on factors including the type of co-carrier, the purpose for which the co-carrier is being added, the coating technique(s) that might be used to apply the second coating onto a substrate, or on to the first aqueous coating composition. In illustrative embodiments, the second aqueous coating composition may include from 0.3 to 20 weight percent, desirably 1 to 5 weight percent of co-carrier(s) based on the total weight of co-carrier and water included in the composition.

Without wishing to be bound by theory, the advantages provided by the coating system are believed to result from one or more possible factors. As one factor, the second resin component preferably includes at least one resin that includes acidic functionality (or a salt or ester thereof). These characteristics are similar to those of many chlorinated resins, such as PVDC, which also tend to be acidic. This kind of similarity is believed to help enhance the compatibility between coatings formed from the first and second aqueous coating compositions, respectively. The second aqueous coating composition includes at least one resin in combination with one or more pigments that cumulatively are present in significant amounts as described further below. The one or more pigments generally are added to the second aqueous coating composition to help thicken the composition and/or to provide sag resistance, as well as for improvements to application processes. These pigment(s) may be organic and/or inorganic. Inorganic pigments are more preferred. The pigments may have a variety of shapes such as being platelet-shaped, acicular, oblong, rounded, spherical, irregular, and combinations of these.

Without being bound by theory, optimal loading of pigments in topcoats formed from the second aqueous coating composition is believed to provide beneficial performance and application characteristics for the coating system. For example, the second aqueous coating composition desirably includes a sufficient amount of pigment content so that the resultant coating demonstrates enhanced compatibility with the underlying primer coating. Without being bound by theory, this enhanced compatibility may prevent the formation of blisters and the loss of adhesion between the primer layer and the topcoat layer. In addition, optimal pigment loading is believed to prevent entrapment of air, moisture or gases that would otherwise produce air bubbles during application to a substrate, or cause blistering and peeling of the coating from the substrate and/or primer. In many respects, the performance and application advantages are contrary to an industry bias that would expect performance to be reduced with increased pigment loading.

In many preferred embodiments, the second aqueous coating composition includes a sufficient amount of pigment, i.e. inorganic pigment particles, such that a resultant coating prepared from the second aqueous coating composition includes from 15 to 85, preferably
20 to 80, more preferably 25 to 80 volume percent of the particles based on the total volume of the dry coating. These pigment particles are non-binder particles, and are distinct from film-forming particles (of binders, for example) that substantially coalesce and help to form part of the binder matrix in the resultant coating. Thus, the term "non-binder" with respect to the pigment particles indicates that the pigment particles retain at least a portion and preferably substantially all of their particulate character, either individually or as agglomerates or aggregates. Preferred pigment particles are non-binder particles, and are substantially non-film forming under the conditions used to form the second aqueous coating composition. To the extent that any portions of such particles might protrude from the coating surface, those protruding portions are deemed to be part of the pigment volume for purposes of calculating the pigment volume concentration (PVC) of the particles in the coating. Optimal pigment loading in the topcoat composition provides beneficial performance and application characteristics for the coating system, reducing air entrapment during application and improving adhesion of the topcoat and primer.

It is preferred that at least a portion of pigment content of the second aqueous coating composition includes one or more platelet shaped pigment particles. Platelet particles have excellent thickening properties, provide excellent sag resistance, and also help with air release.

Examples of platelet-shaped pigments include one or more of a clay such as china clay, mica, talc, and combinations of these. China clay advantageously has less of an impact upon gloss than do many other platelet shaped particles, which is beneficial when higher gloss topcoatings are desired.

In many embodiments, the second aqueous coating composition preferably includes
0 to 50 parts by weight, preferably about 10 parts by weight, more preferably 15 to 50 parts by weight, and most preferably up to 35 parts by weight of platelet-shaped particles per 100 parts by weight of the total weight of the second aqueous coating composition.

The size of platelet particles, expressed as a volume average, may vary over a wide range, ranging from finely sized particles to coarse particles. In illustrative embodiments, platelet particles may have a size in the range from 0.5 to 50 micrometers, preferably 1 to 10 micrometers, more preferably 3 to 5 micrometers. In an aspect, preferably at least
50 wt%, more preferably about 75 wt% and most preferably about 95 wt% of the platelet-shaped particles have size in the range from 0.5 to 50 micrometers, preferably 1 to 10 micrometers

It is desirable that the entire pigment content of the second aqueous coating composition is not all in the form of only platelet shaped particles. By themselves, the platelet particles may help thicken the composition and may help improve sag resistance and application of the coating composition.. Yet too much platelet content could form a barrier to moisture and trapped gases in a dried coating This could make it more difficult to release trapped air and/or trapped moisture from the coating during manufacture and/or coating. Accordingly, in some embodiments, the pigments of the second aqueous coating composition desirably include at least one kind of non-platelet shaped particle used in combination with at least one kind of platelet shaped particle.

A wide variety of non-platelet shaped particles could be used in combination with platelet shaped particles. Examples include one or more insoluble sulfates; one or more insoluble carbides; one or more insoluble nitrides; one or more insoluble oxynitrides; one or more insoluble oxycarbides; one or more insoluble oxides; one or more insoluble carbonates; and combinations of these. Examples of these include sulfates, carbides, nitrides, oxides, oxynitrides, oxycarbides, and/or carbonates of one or more of Be, Mg, Ca, Sr, Ba, Al, Ti, a transition metal, a lanthanoid series metal, an actinoid series metal, Si, Ge, Ga, Al, Sn, Pb, and combinations of these. Specific embodiments of such particles include BaSO₄, titania, SiC, SiN, TiC, TiN, and combinations of these. BaSO₄ is preferred in many formulations. In some embodiments, some pigments help to maintain gloss, help thicken the second aqueous coating composition while allowing air to escape, and help provide resultant coatings with a desirable level of permeability so that moisture has good egress to and from the resultant coating.

The size of non-platelet particles, expressed as a volume average, may vary over a wide range, ranging from finely sized particles to coarse particles. In illustrative embodiments, non-platelet particles may have a size in the range from 0.1 micrometers to 50 micrometers, preferably 0.5 to 10 micrometers. In an aspect, preferably at least 50 wt%, more preferably about 75 wt% and most preferably about 95 wt% of the platelet-shaped particles have a size in the range from 0.1 to 50 micrometers, preferably 0.5 to 10 micrometers.

The weight ratio of platelet-shaped to non-platelet shaped pigments can vary over a wide range. For example, one embodiment of a second aqueous coating composition includes about 14.5 weight percent of relatively rounded BaSO₄ particles and about 14.5 percent by weight of platelet shaped china clay based on the total weight of the coating solids.

To further enhance heat resistance, one or more agents with optimal total solar reflectance (TSR) may be incorporated into the second dispersion. As used herein, the term "total solar reflectance" refers to the sum total of ultraviolent, visible and near infrared reflectance. Agents with high solar reflectance help enhance heat resistance by reflecting or resisting electromagnetic radiation, specifically near-IR radiation, which has wavelength of 0.8 µm to 2 µm.

Examples of such agents are described in Assignee's application, WO 2012/003449 A1 (PCT/US2011/042801, filed July 1,2011). These agents may be incorporated into the coating in accordance with conventional practices currently known or hereafter developed.

In some embodiments, such IR-reflecting agents may include non-IR -absorptive colored pigments. Exemplary such pigments may be inorganic or organic in nature, and include but are not limited to those referred to in U.S. Patent Nos. 6,458,848 B2 (Sliwinski et al.), 6,616,744 B1 (Sainz et al.), 6,989,056 B2 (Babler) and 7,157,112 B2 (Haines) and in U.S. Patent Application Publication No. US 2005/0126441 A1 (Skelhom). Inorganic pigments are especially desirable and include single or mixed metal oxides formed from a variety of metals, e.g., aluminum, antimony, bismuth, boron, chromium, cobalt, gallium, indium, iron, lanthanum, lithium, magnesium, manganese, molybdenum, neodymium, nickel, niobium, silicon, tin, vanadium or zinc.

Exemplary metal oxides include Cr₂O₃, Al₂O₃, V₂O₃, Ga₂O₃, Fe₂O₃, Mn₂O₃, Ti₂O₃, In₂O₃, TiBO₃, NiTiO₃ MgTiO₃, CoTIO₃, ZnTiO₃, FeTiO₃, MnTiO₃ CrBO₃, NiCrO₃, FeBO₃, FeMoO₃, FeSn(BO₃)₂, BiFeO₃, AlBO₃, Mg₃Al₂Si₃O₁₂, NdAlO₃, LaAlO₃, MnSnO₃, LiNbO₃, LaCoO₃, MgSiO₃, ZnSiO₃, Mn(Sb,Fe)O₃ and mixtures thereof. The metal oxide may have a rutile-kassiterite, spinel, and/or corundum-hematite crystal lattice structure as described in the above-mentioned U.S. Patent No. 6,454,848 B2, or may be a host component having a corundum-hematite crystalline structure which contains as a guest component one or more elements selected from aluminum, antimony, bismuth, boron, chromium, cobalt, gallium, indium, iron, lanthanum, lithium, magnesium, manganese, molybdenum, neodymium, nickel, niobium, silicon, tin, vanadium and zinc.

Black non-infrared-absorptive pigments are of particular interest due to the high infrared absorption of conventional carbon black pigments and the widespread use of carbon black pigments in conventional dark-tinted paints and stains. A variety of black non-infrared-absorptive pigments are commercially available, including mixed metal oxide pigments such as those supplied by Ferro Corporation under the COOL COLORS™ and ECLIPSE™ trademark, for example V-778 COOL COLORS IR Black, V-780 COOL COLORS IR Black, V-799 COOL COLORS IR Black, 10201 ECLIPSE Black, 10202 ECLIPSE Black and 10203 ECLIPSE Black; mixed metal oxide pigments such as those supplied by Shepherd Color Company under the ARTIC™ trademark, for example ARTIC Black 376, ARTIC Black 10C909, ARTIC Black 411 and ARTIC Black 30C940; mixed metal oxide pigments such as those supplied by Tomatec America, Inc. under the numbers 42-707A and 707V10; and perylene-based or other organic colorants such as those supplied by BASF Corp. under the PALIOGEN™ trademark including PALIOGEN Black S 0084.

These same suppliers also provide non-infrared-absorptive colored pigments in a variety of hues other than black, typically under the same trademarks, and these may likewise be employed in the disclosed coating compositions. Exemplary non-infrared-absorptive non-black pigments include inorganic pigments such as iron oxide, magnesium silicates, calcium carbonate, aluminosilicates, silica and various clays; organic pigments including plastic pigments such as solid bead pigments (e.g., polystyrene or polyvinyl chloride beads); and microsphere pigments containing one or more voids (e.g., those discussed in U.S. Patent Application Publication No. US 2007/0043162 A1 (Bardman et al.)).

Other exemplary non-infrared-absorptive pigments include EXPANCEL™ 551DE20 acrylonitrile/vinyl chloride expanded particles (from Expancel Inc.), SIL-CEL™ 43 glass micro cellular fillers (from Silbrico Corporation), FILLITE™ 100 ceramic spherical particles (from Trelleborg Fillite Inc.), SPHERICEL™ hollow glass spheres (from Potter Industries Inc.), 3M ceramic microspheres including grades G-200, G-400, G-600, G-800, W-210, W-410, and W-610 (from 3M); 3M hollow microspheres including 3M Performance Additives iM30K (also from 3M), INHANCE™ UH 1900 polyethylene particles (from Fluoro-Seal Inc.), and BIPHOR aluminum phosphate (from Bunge Fertilizantes S.A., Brazil).

The disclosed coating compositions may also contain non-infrared-absorptive non-colored pigments such as titanium dioxide and white zinc oxide, either of which if used without the presence of a colored pigment would provide a white rather than colored coating composition. The addition of such non-colored pigments to the above-mentioned non-infrared-absorptive colored pigments can provide tinted paints and stains having a lightened shade and improved hiding power. Preferably the disclosed coating compositions contain 8 to 50 wt% and more preferably 20 to 30 wt% pigment based on total solids. Expressed on the basis of pigment volume concentration, the disclosed coating compositions preferably contain
10 to 40 vol% and more preferably 15 to 35 vol% pigment. The compositions desirably are free of or substantially free of infrared-absorptive colored pigments, e.g., carbon black, black iron oxide, brown oxide and raw umber.

A wide variety of other additional ingredients optionally may be included in the second aqueous coating composition if desired. Examples of these include one or more defoaming aids, grinding aids, wetting agents, surfactants, coalescing aids, processing aids, skid resistance agents, abrasion resistance agents, conductive agents, antistatic agents, coloring agents, anticorrosion aids, thickeners, sag resistant agents, plasticizers, antioxidants, ultraviolet stabilizers, biocides, fungicides, fillers, and combinations of these. These can be used in accordance with conventional practices currently known or hereafter developed.

The second aqueous coating composition can be made using a variety of techniques. Exemplary techniques are described below in the examples.

The topcoat composition of the present invention may be used to form topcoatings having a wide range of thicknesses. In illustrative embodiments, top coatings have a thickness in the range from 15 micrometers to 200 micrometers, preferably 15 micrometers to 100 micrometers, more preferably 30 micrometers to 50 micrometers.

The coating systems of the present invention can be used to coat a wide variety of substrates. Exemplary substrates include natural and engineered buildings and building materials, freight containers, flooring materials, walls, furniture, other building materials, motor vehicle components, aircraft components, trucks, rail cars and engines, bridges, water towers, cell phone tower, wind towers, radio towers, lighting fixtures, statues, billboard supports, fences, guard rails, tunnels, pipes, marine components, machinery components, laminates, equipment components, appliances, and packaging. Exemplary substrate materials include metals, metal alloys, intermetallic compositions, metal-containing composites, and combinations of these.

Exemplary metals include aluminum, steel, weathering steel, and stainless steel.

The coating compositions can be applied on new substrates or can be used to refurbish old substrates, including previously painted substrates.

In use, a substrate to be coated is provided. The substrate may be bare or may be at least partially coated with a previous coating system, such as a so-called shop primer used to coat metal substrates. Illustrative shop primers include conventional shop primers and the novel primers disclosed in Applicant's U.S. Patent Appln. Ser. No. 61/322,795 ("Waterborne Shop Primer", Prevost et al.), filed 9 April 2010. It may be desirable to clean the substrate to remove grease, dirt, and other contaminants. Pre-existing coatings may or may not be removed as well, depending upon the context. When the substrate is ready, the first aqueous coating composition is applied to at least a portion of the substrate surface. Optionally, the coating is allowed to dry or partially dry to form a basecoating. One or more additional coats of the first aqueous coating composition can be applied if desired. Often, a single coating is suitable.

Next, a second aqueous coating composition, if needed, is preferably applied onto at least a portion of the basecoating and allowed to dry to form a topcoating. Additional portions of the substrate not bearing the basecoating may be coated with the topcoat as well, if desired. One or more additional coats of the second aqueous coating composition can be applied if desired. Often, a single coating is suitable. The first and second aqueous coating compositions may be applied to the substrate using any suitable technique known in the art, such as by brushing, spraying, spin coating, roll coating, curtain coating, dipping, and/or gravure coating.

In addition to being applied over primer coatings formed by the first aqueous composition, the topcoat composition can be applied to form coatings on other kinds of coated and uncoated substrates as well. For example, some embodiments of the second aqueous coating composition may be used to topcoat coated or uncoated stainless steel and/or epoxy primer coatings as described in Assignee's co-pending Application, filed concurrently herewith. The coating system of the present invention is particularly suitable for forming protective coatings on cargo containers. Preferably, the coating system is used with cargo containers involved in intermodal freight transport. Many of such containers at least substantially conform to an international standard applicable to cargo containers that are transported by at least one of a marine cargo system that transports cargo across waterways, a system that transports cargo along a railway, and/or a system that transports cargo along a roadway. Such containers are often exposed to extreme environments in terms of weather exposure, salt water exposure, fresh water exposure, and heat from the sun, during their service lives. Even though such containers often may be made from corrosion resistant materials such as stainless steel and/or weathering steel, further protection against abrasion, and corrosion is needed.

An exemplary intermodal cargo container is often referred to in the industry as a dry cargo container. These containers generally include a metal frame defining the boundary of the container. Metal wall and ceiling panels are attached to the frame such as by bolts, welding, and rivets, and the floor of the container may be metal, wood or other materials. The panels can be made from a wide variety of metals, metal alloys, intermetallic compositions, or other metal-containing materials as described above. Due to its low cost and corrosion resistance, weathering steel (sometimes referred to as COR-TEN brand steel) often is used to make the panels. In a manner similar to aluminum, weathering steel oxidizes on the surface, but then this oxidation forms a barrier to protect the underlying steel from further corrosion. According to ASTM standards, weathering steel is available in grades including A242, A588, and A602. The container frames also may be made from weathering steel or a different metal composition. Even though weathering steel develops a protective oxidation barrier against corrosion, the industry still tends to widely apply protective coatings onto intermodal containers made from weathering steel. The coatings may also provide decoration, brand identity, bar codes, and other indicia.

The primer composition (i.e. first aqueous coating composition) of the present invention shows excellent adhesion and performance when used to protect intermodal containers, including those made from weathering steel. The first aqueous coating composition can be applied directly to metal surfaces, including weathering steel surfaces. For example, although shop primer is typically applied to protect metal substrates from damage during manufacture or transport, it is not applied to weld seams. In such cases, the primer composition of the present invention can be applied directly to the metal surface to provide the necessary corrosion protection.

Because the first aqueous coating composition shows excellent adhesion to both unprimed and primed metal surfaces, any previously applied shop primer weathering does not have to be removed. However, for improved adhesion, it is desirable to remove oxide from the surface, including any oxide formed on the shop primer. This can be done in any suitable way, such as by shot blasting, for example. Once surface oxide has been removed, a primer coat of the present invention, i.e. a coat of the first aqueous coating composition, can be formed or applied. After this, a topcoat of the present invention, i.e. the second aqueous coating composition, is formed or applied over the primer coat, if a topcoat is desired. The resultant coating system provides excellent gloss, durability, corrosion resistance, adhesion, resistance to blisters, resistance to peeling, and resistance to cracking.

For certain applications, the first aqueous coating composition can be applied directly to both unprimed and primed metal surfaces, and a topcoat is optional. If a topcoat is applied (to obtain a specific aesthetic appearance), the topcoat may be a water-bome topcoat or a solvent-borne topcoat.

Some embodiments of the present invention are summarized in the following items:
1. A coating system, comprising:
   a first aqueous coating composition, comprising
      an aqueous carrier;
      a first resin component in admixture with the aqueous carrier and
   comprising at least one chlorinated resin; and
   one or more fillers; and
   a second aqueous coating composition, comprising:
      an aqueous carrier;
      a second resin component in admixture with the aqueous carrier and comprising at least one resin compatible with the first resin component; and
      one or more pigments such that a dried coating prepared from the second aqueous coating composition includes at least 15 vol% of pigment based on the total volume of coating solids in the dried coating.
2. A coating system comprising:
   a first aqueous coating composition, comprising
      an aqueous carrier;
      a first resin component in admixture with the aqueous carrier and
   comprising at least one chlorinated resin; and
   one or more fillers; and
   a second coating composition, comprising
   a carrier;
   a second resin component in admixture with the carrier; and
   one or more pigments,
   wherein the carrier in admixture with the second resin component may be an aqueous solvent or a non-aqueous solvent.
3. The coating system of any preceding item, wherein the first aqueous coating composition comprises from 20 to 80 weight percent of the first resin component.
4. The coating system of any preceding item, wherein the first resin component comprises from 50 to 100 weight percent chlorinated resin based on the total weight of the first resin component.
5. The coating system of any preceding item, wherein the chlorinated resin is polyvinylidene chloride.
6. The coating system of any preceding item, wherein the first aqueous coating composition further comprises an anticorrosive agent.
7. The coating system of any preceding item, wherein the chlorinated resin is thermoplastic.
8. The coating system of any preceding item, wherein the chlorinated resin is thermosetting.
9. The coating system of any preceding item, wherein the first aqueous composition optionally comprises one or more beat-stabilizing additives.
10. The coating system of any preceding item, wherein the one or more heat-stabilizing additives are selected from the group consisting of epoxy-functional resins, antioxidants, flash rust inhibitors, organosulfur compounds, dienophiles, and mixtures thereof.
11. The coating system of any preceding : item, wherein the heat-stabilizing additive further comprises up to 50 weight percent epoxy-functional resin based on the total weight of resin in the first aqueous coating composition.
12. The coating system of any preceding item, wherein the first aqueous coating composition is substantially free of metals or metal-containing species capable of catalyzing degradation of the chlorinated resin.
13. The coating system of any preceding item, wherein the first aqueous coating composition further comprises an anticorrosive agent substantially free of metals or metal-containing species capable of catalyzing degradation of the chlorinated resin.
14. The coating system of any preceding item, wherein the first aqueous coating composition includes no more than 5 weight percent catalytic metal or metal-containing species, preferably Zn or Zn-containing species.
15. The coating system of any preceding item, wherein the first aqueous coating composition includes substantially no catalytic metal or metal oxide.
16. The coating system of any preceding item, wherein one or more of the fillers included in the first aqueous coating composition are selected from the group consisting of BaSO₄, CaCO₃, dolomite, wollastonite, silica, chlorite, talc, china clay, mica, glass beads, and mixtures thereof.
17. The coating system of any preceding item, wherein the one or more fillers included in the first aqueous coating composition have a total oil absorption of 10 to 40 g per 100 g total weight of the filler.
18. The coating system of any preceding item, wherein one or more of the fillers included in the first aqueous coating composition are selected from the group consisting of BaSO₄, CaCO₃, dolomite, wollastonite, silica, and mixtures thereof.
19. The coating system of any preceding item, wherein the second aqueous coating composition comprises a free radically polymerizable reactant capable of film formation.
20. The coating system of any preceding item, wherein the second aqueous coating composition comprises (a) at least one non-aromatic reactant having pendant free radically polymerizable functionality; (b) optionally, at least one aromatic reactant having pendant free radically polymerizable functionality; and (c) optionally at least one other copolymerizable reactant having free radically polymerizable functionality.
21. The coating system of any preceding item, wherein the second aqueous coating composition comprises (a) at least one aromatic reactant having pendant free radically polymerizable functionality; (b) at least one free radically polymerizable reactant having pendant acid functionality, or a salt or ester thereof; and (c) optionally at least one other copolymerizable reactant having free radically polymerizable functionality.
22. The coating system according to any preceding item, wherein one or more pigments comprise platelet-shaped particles and non-platelet-shaped particles, wherein the weight ratio of the platelet-shaped particles to the non-platelet-shaped particles is in the range from 1:10 to 10:1.
23. The coating system according to any preceding item, wherein one or more pigments of the second aqueous composition are selected from the group consisting of china clay, talc, mica, barium sulfate, calcium carbonate, wollastonite, dolomite, silica, chlorite, and mixtures thereof.
24. The coating system according to any preceding item, wherein the pigment volume concentration of the one or more pigments in the dry coating formed from the second aqueous coating composition is from 15 to 85 volume percent.
25. The coating system according to any preceding item, wherein the pigment volume concentration of the one or more pigments in the dry coating formed from the second aqueous coating composition is from 25 to 80 volume percent.
26. A coated article, comprising:
   a substrate surface;
   a first coating formed directly or indirectly on at least a portion of the substrate surface, said first coating comprising the first aqueous coating composition of the coating system of item 1; and
   optionally, a second coating formed directly or indirectly on at least a portion of the the first coating, said coating comprising the second coating composition of the coating system of item 1.

Herein also described are the following embodiments:
27. A coated article, comprising:
   a substrate surface;
   a corrosion-resistant first coating formed directly or indirectly on at least a portion of the substrate surface, said first coating comprising a chlorinated resin; and
   a second coating having a sufficient volume concentration of pigment to allow air release during application, wherein the second coating is formed directly or indirectly on at least a portion of the first coating.
28. A method of coating a metallic surface of an article, comprising the steps of:
   providing a substrate including a primer coating derived from ingredients comprising a chlorinated resin provided on at least a portion of the substrate; and
   applying a second aqueous coating composition of any preceding item, onto at least a portion of the primer coating under conditions effective to form a second coating on at least a portion of the primer coating.
29. The method or coating system of any preceding item, wherein the carrier in admixture with the second resin component is an aqueous solvent.
30. The method or coating system of any preceding item, wherein the carrier in admixture with the second resin component is a non-aqueous solvent.
31. The method or coating system of any preceding item, wherein the first resin component further comprises no more than 50 weight percent acrylic resin based on the total weight of the first resin component.
32. A method of making a coating composition, comprising the steps of:
   providing an aqueous composition comprising a chlorinated resin wherein the pH of the composition is from 3 to 8;
   combining the aqueous composition with one or more additional ingredients including an epoxy-functional ingredient.
33. The method of any preceding : item, wherein step (a) comprises (i) providing an acidic, aqueous composition comprising a chlorinated polymer; and (ii) increasing the pH of the aqueous composition.
34. The method of any preceding item, wherein increasing the pH comprises contacting the aqueous composition with a base selected from ammonia and an amine.
35. The method of any preceding item, wherein increasing the pH comprises contacting the aqueous composition with potassium hydroxide.
36. The method of any preceding item, wherein the epoxy functional ingredient is a bisphenol A epoxy resin.
37. The method of any preceding item, wherein the epoxy functional ingredient has a viscosity in the range of 5 to 20,000 cP and an epoxy equivalent weight of 150 to 800 g/eq.
38. A coating system comprising:
   a first aqueous coating composition, comprising
      an aqueous carrier;
      a first resin component in admixture with the aqueous carrier and
   comprising at least one chlorinated resin; and
   at least one epoxy functional ingredient; and
   optionally, a second coating composition, comprising
   a carrier;
   a second resin component in admixture with the carrier; and
   one or more pigments wherein the carrier in admixture with the second resin component may be an aqueous solvent or a non-aqueous solvent.
39. A coating system comprising:
   a first aqueous coating composition, comprising
      an aqueous carrier;
      a first resin component in admixture with the aqueous carrier and comprising at least one chlorinated resin; and
      one or more fillers; and
   optionally, a second coating composition, comprising
      a carrier;
      a second resin component in admixture with the carrier; and
      one or more pigments wherein the carrier in admixture with the second resin component may be an aqueous solvent or a non-aqueous solvent.
40. The coating system of any preceding item, wherein one or more of the fillers included in the first aqueous coating composition are selected from the group consisting of BaSO₄, CaCO₃, dolomite, wollastonite, silica, chlorite, talc, china clay, mica, glass beads, and mixtures thereof.
41. The coating system of any preceding ,item, wherein the one or more fillers included in the first aqueous coating composition have a total oil absorption of: 10 to 40 g per 100 g total weight of the filler.
42. The coating system of any preceding item, wherein one or more of the fillers included in the first aqueous coating composition are selected from the group consisting of BaSO₄, CaCO₃, dolomite, wollastonite, silica, and mixtures thereof.

### EXAMPLES

The present invention will now be described with reference to the following illustrative examples.

In some embodiments, the coating system described herein provides excellent corrosion resistance and heat resistance. These properties can be tested in various ways. Unless otherwise indicated, the following tests were used in the Examples that follow.

### Water Sonk/Immersion Test

Panels of metal substrates (cold rolled steel or coarse-blasted metal) are sprayed with the coating system of the invention. The coating is allowed to dry, and coated panels are then wetted by standard ways known to those of skill in the art, including, for example, by immersing, rinsing, washing or soaking the coating or coated panel. Panels are evaluated for corrosion performance based on the time to adhesion failure.

### Adhesion Test

ASTM D4541 Method D: this method is the standard method for adhesion testing of hard substrates, i.e. Pull-Off Strength of Coatings Using Portable Adhesion Testers.

ASTM D3359 Method B: this method is the standard method for adhesion testing thin films applied to metal substrates, i.e. films with dry film thickness of less than 5 mils (0.013 cm).

### Salt Spray testing

Salt spray testing is a standardized method to determine corrosion resistance of coatings applied to metal substrates. The test is conducted in a salt spray cabinet, where a salted solution (typically 5% NaCl) is atomized and sprayed on to the surface of a test panel to which the coating composition of the invention is applied. The panel is thus maintained in a salt fog that duplicates a highly corrosive environment. Test parameters are used according to ASTM B117 (Standard Practice for Operating Salt Fog Apparatus).

Panels subjected to salt spray testing are then analyzed for corrosion resistance by various methods, including cross-hatch adhesion testing (as described above) or by blister rating, using ASTM D714 (Standard Test Method for Evaluating Degree of Blistering of Paints). With the ASTM D714 test, blisters are rated on a scale of 1 to 10. A blister rating of 10 implies effective corrosion resistance, whereas a blister rating of 8 or less implies failure.

### Heat stability by GC/MS

For testing the heat stability of the composition described herein, test panels are coated and cut into 0.25" x 1.5" (0.64 cm x 3.81 cm) strips and placed in a 20 ml glass headspace vial. The vial is sealed with an airtight cap and placed into an oven for the appropriate time and temperature. After the heat cycle, the vial is immediately placed into an G 1888 Network Headspace Sampler (Agilent Technologies, Santa Clara CA) and the headspace analyzed using an 6890N Gas Chromatograph/5975B XL-MSD (Agilent), Capillary column = DB-1, 50 meter, 0.2 mm ID, 0.33 µm film. Any detection of HCl in the headspace denotes degradation of the chlorinated resin.

### Water vapor transmission rate (WVTR testing

Cured firms prepared as described below in Example 1 are provided on release paper. Circular test samples (4 cm in diameter) are cut in duplicate using a standard template. Each sample is placed on a mask (metal; 5 cm²) and sealed with grease and a rubber gasket. The sample is then placed in a water vapor transmission analyzer (Water Vapor Permeation Analyzer (model 7001); Illinois Instruments Inc., Johnsburg IL (USA)), and water vapor transmission readings are taken, and reported after eight hours of analysis. Water vapor transmission rate is reported in g/m²/day.

### EXAMPLE 1: Water-based primer formulation

The following ingredients are charged to a high speed mixing vessel. All listed amounts are parts by weight unless otherwise noted.

| **Table 1a** | | | | |
|---|---|---|---|---|
| **Raw material** | **Vendor** | **Run 1** | **Run 2** | **Run 3** |
| AIPO3 | Various | 6.05 | | 6.05 |
| Ammonium Hydroxide | Ashland | 0.0026 | 0.0026 | 0.0026 |
| Bentone LT | Elementis | 0.086 | 0.086 | 0.086 |
| BYK 024 | BYK | 0.13 | 0.13 | 0.13 |
| BYK 155 | BYK | 0.52 | 0.52 | 0.52 |
| Dynol 604 | Air Products | 0.17 | 0.17 | 0.17 |
| EB solvent | Eastman Chemicals | 1.44 | 1.44 | 1.44 |
| Epi-rez 3510 | Hexion | | | 3.4 |
| Monolite carbon black | Heubauch | 0.85 | 0.85 | 0.85 |
| Pluronic F87 (30%) in Water | BASF | 5.1 | 5.1 | 5.1 |
| Shieldex | Grace | | 6.05 | |
| Sodium nitrite (10%) in water | Shiwu | 0.81 | 0.81 | 0.81 |
| Surfynol 104 | Air Products | 0.46 | 0.46 | 0.46 |
| Talc | Specialty Minerals | 20.37 | 20.37 | 20.37 |
| Texanol | Eastman Chemicals | 0.0937 | 0.0937 | 0.0937 |
| Water | | 15.41 | 10.6 | 10.6 |

The mixture is dispersed at high speed to a grind of 5-6 Hegman, then letdown with the following mixture of Table 1b. In some modes of practice, it may be desirable to pre-disperse the Bentone LT material in a portion of the water.

| **Table 1b** | | | | |
|---|---|---|---|---|
| Ammonium Hydroxide | pH control | 0.16 | 0.16 | 0.16 |
| Haloflex 202 | DSM Neoresins | 47.15 | 47.15 | 47.15 |

To the above is added the ingredients listed in Table 1c.

| **Table 1c** | | | | |
|---|---|---|---|---|
| Acrysol RM-8W | Rohm & Haas | 0.03 | 0.03 | 0.03 |
| Foamaster S | Cognis | 0.21 | 0.21 | 0.21 |

The primers of Runs 1 and 2 are formulated for situations that might experience high use temperatures. The primer of Run 1 is further formulated with a lower pH for improved flash rusting resistance. The primer of Run 3 has an epoxy component also to improve heat resistance.

### EXAMPLE 2: Waterborne topcoat formulations

The following ingredients are charged to a high speed mixing vessel. All listed amounts are parts by weight unless otherwise noted.

| **Table 2a** | | | |
|---|---|---|---|
| **Raw material** | **Vendor** | **Run 1** | **Run 2** |
| Aerosil 200 | Evonik | 0.4 | 0.4 |
| ASP 170 | BASF | 11.6 | 11.6 |
| Cimbar Ex | Cimbar | 11.6 | 11.6 |
| Disperbyk 190 | BYK | 1.2 | 1.2 |
| EB Solvent | Eastman Chemicals | 0.9 | 0.9 |
| Foamaster SA-3 | Cognis | 0.3 | 0.3 |
| Red Oxide | Chemik | 1.8 | |
| Tiona 595 | Cristal | 0.5 | 5 |
| Water | | 4.3 | 4.3 |
| Yellow Oxide | Chemik | 2.6 | |

The mixture is dispersed at high speed to a grind of 6.5 Hegman, then letdown with the following mixture of Table 2b.

| **Table 2b** | | | |
|---|---|---|---|
| Acrysol RM-8W | Rohm & Haas | 1.4 | 1.4 |
| Ammonium Hydroxide | Ashland | 0.5 | 0.5 |
| EPS2568 | E.P.S. | 43.3 | 43.3 |
| Foamaster SA-3 | Cognis | 0.4 | 0.4 |
| Texanol | Eastman Chemicals | 2.2 | 2.2 |
| Water | | 17 | 16.9 |

The topcoat of Run 1 has relatively high pigment to binder ratio and is a brown color. The topcoat of Run 2 had relatively high pigment to binder ratio and is a white color.

### EXAMPLE 3: Water-based primer formulation with Zn

The following ingredients are charged to a high speed mixing vessel. All listed amounts are parts by weight unless otherwise noted.

| **Table 3a** | | |
|---|---|---|
| **Raw material** | **Vendor** | **Run 1** |
| Ammonium Hydroxide | Ashland | 0.0026 |
| Bentone LT | Elementis | 0.086 |
| BYK 024 | BYK | 0.13 |
| BYK 155 | BYK | 0.52 |
| Dynol 604 | Air Products | 0.17 |
| EB solvent | Eastman Chemicals | 1.44 |
| K-White 84S | Tayca | 6.05 |
| Monolite carbon black | Heubauch | 0.85 |
| Pluronic F87 30%in Water | BASF. | 5.1 |
| Sodium nitrite 10%in water | Shiwu | 0.81 |
| Surfynol 104 | Air Products | 0.46 |
| Talc | Specialty Minerals | 20.37 |
| Texanol | Eastman Chemicals | 0.0937 |
| Water | | 15.41 |

The mixture is dispersed at high speed to a grind of 5-6 Hegman, then letdown with the following ingredients of Table 3b. The Bentone LT may be predispersed in a portion of the water.

| **Table 3b** | | |
|---|---|---|
| Ammonium Hydroxide | Ashland | 0.16 |
| Haloflex 202 | DSM Neoresins | 47.15 |
| Then add: | | |
| Acrysol RM-8W | Rohm & Haas | 0.03 |
| Foamaster S | Cognis | 0.21 |

### EXAMPLE 4: Water-based Topcoat (low pigment volume)

Run 1: The following ingredients are charged to a high speed mixing vessel. All listed amounts are parts by weight unless otherwise noted.

| **Table 4a** | | |
|---|---|---|
| **Raw material** | | **Run 1** |
| Aerosil 200 | Evonik | 0.4 |
| Disperbyk 190 | BYK | 1.1 |
| EB Solvent | Eastman Chemicals | 0.9 |
| Foamaster SA-3 | Cognis | 0.3 |
| Tiona 595 | Cristal | 11.9 |
| Water | | 3 |

The mixture is dispersed at high speed to a grind of 6.5 Hegman, then letdown with the following mixture of Table 4b.

| **Table 4b** | | |
|---|---|---|
| Acrysol RM-8W | Rohm & Haas | 1.4 |
| Ammonium Hydroxide | Ashland | 0.5 |
| EPS2568 | E.P.S. | 60.8 |
| Foamaster SA-3 | Cognis | 0.5 |
| Texanol | Eastman Chemicals | 2.2 |
| Water | | 17 |

### EXAMPLE 5: Performance Testing

Coatings prepared in the above examples are applied on standard dry container lines with minimal modification and can run at similar line sneeds when used in coniunction with suitable curing ovens such as are as described in US 2012/0015102 A1 (U.S. Pat. Application Ser. No. 12/837,833 (filed 16 July 2010)). The inventive examples pass IICL specification and industry standard performance testing. For better results the first aqueous composition is allowed to substantially dry before the second aqueous composition is applied.

Performance testing of primer/topcoat systems are reported in the following tables.

| **Combination** | **Salt Spray Testing ASTM B117** | **Water Soak 60 hours @ 25°C w/tap water** | **Heat Testing 30 days at 82°C constant temperature** |
|---|---|---|---|
| Ex #1 Run 1 / Ex#2 Run 1 | No. 10 | No. 10 | No. 10 |
| Ex # 1 Run 1 / Ex#2 Run 2 | No. 10 | No. 10 | No. 10 |
| Ex #1 Run 2 / Ex#2 Run 1 | No. 10 | No. 10 | No. 10 |
| Ex #1 Run 2 / Ex#2 Run 2 | No. 10 | No. 10 | No. 10 |
| Ex #1 Run 3 / Ex#2 Run 1 | No. 10 | No. 10 | No. 10 |
| Ex #1 Run 3 / Ex#2 Run 2 | No. 10 | No. 10 | No. 10 |
| Ex #3 Run 1 / Ex#2 Run 1 | No. 10 | No. 10 | Medium No. 6 |
| Ex #1 Run 1 / Comparative Ex#4 Run 1 | Medium No. 8 | Medium No. 8 | No. 10 |
| Ex #3 Run 1 / Comparative Ex#4 Run 1 | Medium No. 8 | Medium No. 8 | Medium No. 6 |

Blister ratings are observed in accordance with ASTM D-714

| **Description** | **Water vapor transmission rate (g/m²/day)** | **Temperature** | **Relative Humidity** |
|---|---|---|---|
| Example #1 Run 1 | 5.3 | 38.7 °C | 90% |
| Example #2 Run 1 | 65.1 | 38.7 °C | 90% |

### Test Equipment: Illinois Instruments Model 7001

The above performance testing demonstrates that a primer composition containing Zn (Example 3, Run 1) is corrosion-resistant on prolonged exposure to water at low temperatures of 77°F (25°C), but fails at high temperatures. A topcoat composition with low pigment volume (Example 4, Run 1) shows poor performance on water soak and salt spray, and fails when applied over a Zn-containing primer composition (Example 3, Run 1). The water vapor transmission rate data suggests that the primer composition is relatively impermeable, while the topcoat is water-permeable.

### EXAMPLE 6: Effect of Filler Type on Primer Performance

To determine the effect of filler type on coating performance, primer compositions as described in Example 1 (Run 3) were prepared, replacing talc with fillers as shown below in Table 6a, which shows the physical properties of the various fillers used in formulating the primer composition. In addition, the additives (Bentone, Byk 024, sodium nitrite, Dynol 604 and Surfynol 104) of Example 1 (Run 3) are omitted from the primer compositions, and the pigment volume concentration of the fillers is adjusted to 14.

**Table 6a. Properties of Filler Material**

| **Filler** | **Particle Shape** | **Oil Absorption (g of oil/ 100g)** | **Median particle size (micron) µm** | **Surface Area (m²/g)¹** |
|---|---|---|---|---|
| Glass beads | spherical | 0 | 5.0 | -- |
| BaSO₄ | nodular | 10 | 1.0 | -- |
| CaCO₃ | nodular | 15 | 2.8 | 3.0 |
| Dolomite | nodular | 17 | 4.9 | 2.5 |
| Wollastonite | acicular | 27 | 3.5 | 2.9 |
| Silica | nodular | 28 | 2.4 | 1.6 |
| Chlorite | lamellar | 41 | 3.6 | 9.0-10.0 |
| Talc | platy | 44 | 2.0 | 14.0 |
| China clay | lamellar | 45 | 0.4 | 19.0 |
| Mica | platy | 65 | 17.0 | 6.3 |

| | | | | |
|---|---|---|---|---|
| ¹Surface area information was provided by the filler vendor and is believed to be BET nitrogen adsorption, according to various known ASTM test methods (e.g., ASTM D1993-03; Standard Test Method for Surface Area by Multipoint BET Nitrogen Adsorption). | | | | |

The primer compositions were sprayed on test panels (either cold rolled steel (CRS) or blasted steel (BS)) and allowed to cure. Water-based topcoat formulations as described in Example 2 were then applied to each panel, and the panels were dried.

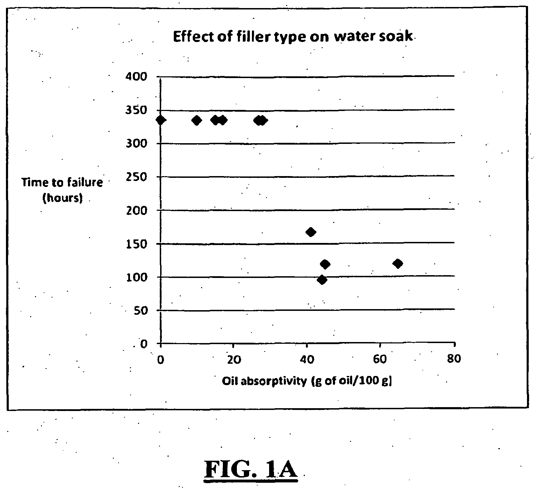

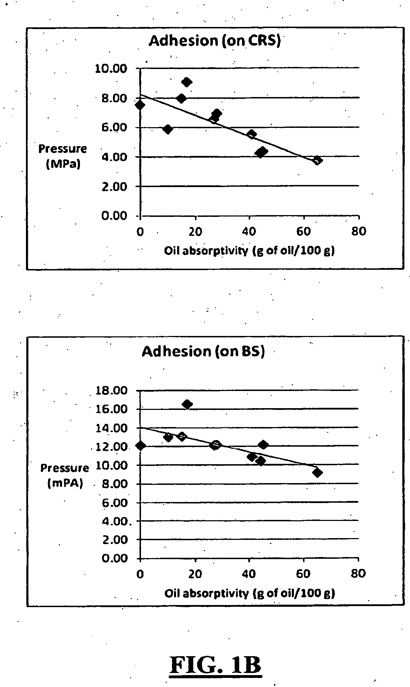

Each test panel was subjected to various corrosion tests, including water soak testing, salt spray testing, adhesion testing and cyclic corrosion testing. All test panels pass industry-standard IICL testing and cyclic corrosion testing. Corrosion resistance on water soak testing and adhesion testing are shown in Table 6b, and graphically represented in Figure 1A and Figure 1B.

**Table 6b: Performance Testing Results**

| **Filler** | **Water Soak (hours to failure)¹** | **Adhesion (CRS; MPa)** | **Adhesion (BS; MPa)** |
|---|---|---|---|
| Glass beads | >336 | 7.52 | 12.11 |
| BaSO₄ | > 336 | 5.87 | 12.99 |
| CaCO₃ | > 336 | 7.97 | 13.04 |
| Dolomite | > 336 | 9.08 | 16.54 |
| Wollastonite | > 336 | 6.53 | 12.10 |
| Silica | > 336 | 6.95 | 12.15 |
| Chlorite | 168 | 5.51 | 10.87 |
| Talc | 96 | 4.24 | 10.43 |
| China clay | 120 | 4.37 | 12.15 |
| Mica | 120 | 3.76 | 9.14 |

| | | | |
|---|---|---|---|
| ¹A result of greater than 336 hours to failure on water soak testing indicates that panels had not failed 14 days past the initial exposure to water. | | | |

### EXAMPLE 7: Effect of Filler on Primer Performance

Primer formulation (A) was prepared as shown in Example 1 (Run 3), but with epoxy resin and surfactants removed, and with talc completely replaced with BaSO₄. Similarly, primer formulation (B) was prepared as shown in Example 1 (Run 3), with epoxy resin and surfactants removed, and with talc replaced with a mixture of 50% talc and 50% BaSO₄. Primer formulation (C) was prepared as shown in Example 1 (Run 3), with epoxy resin and other additives removed, but retaining talc as the filler (i.e. 100% talc). The volume concentration of filler material was maintained constant. Cold-rolled steel test panels were sprayed with primer formulations (A), (B) and (C), and the panels were then subjected to water soak testing. The panels were evaluated for adhesion failure over a 14-day period, and blister ratings were determined using ASTM D714 over the same time course. The results are shown in Table 7 below.

**Table 7. Effect of Filler Type of Blister Formation over Time**

| **Primer** | **Water soak (days to failure)** | **Blister rating** | | | | | | | | | | | | | |
|---|---|---|---|---|---|---|---|---|---|---|---|---|---|---|---|
| | | **Day 1** | **2** | **3** | **4** | **5** | **6** | **7** | **8** | **9** | **10** | **11** | **12** | **13** | **14** |
| A | 14+ | 10 | 10 | 10 | 10 | 10 | 10 | 10 | 10 | 10 | 10 | 10 | 10 | 10 | 10 |
| B | 14+ | 10 | 10 | 10 | 10 | 10 | 10 | 10 | 10 | 10 | 10 | 10 | 10 | 10 | 10 |
| C | 2 | 10 | 5 | 5 | 1 | 1 | 1 | 1 | 1 | 1 | 1 | 1 | 1 | 1 | 1 |

### EXAMPLE 8: Effect of Filler Volume Concentration on Primer Performance

To evaluate the effect of filler volume concentration on coating performance, control primer compositions were prepared as described in Example 1 (Run 3), but with epoxy resin and additives removed. The talc is completely replaced with BaSO₄ as the filler. Test formulations were prepared by modifying the filler volume concentration, with each test formulation prepared at low and high filler volume (14 and 32 vol% respectively, for adhesion testing; 14 and 24 vol% respectively for water soak testing),

The primer formulations were then applied to cold-rolled steel test panels, and each test panel was assessed for performance by adhesion testing. Results are shown in Table 8a and 8b.

**Table 8a. Effect of Filler Volume on Water Soak Performance**

| **Primer Formulation** | **Water Soak (hours to failure)** |
|---|---|
| Control (Run 1, Example 3) | >336 |
| Low filler (14 Vol%) | >336 |
| High filler (24 vol%). | 240 |

**Table 8b. Effect of Filler Volume on Adhesion**

| **Primer Formulation** | **Adhesion (MPa)** |
|---|---|
| Control (Run 1. Example 3) | 4.14 |
| Low filler (14 vol%). | 3.22 |
| High filler (32 vol%) | 1.23 |

### EXAMPLE 9: Effect of Zinc on Heat Stability of Primer

Without being bound to theory, it is believed that the presence of certain Zn-containing species may accelerate degradation of the chlorinated resin used in the primer composition. To support this observation, primer formulations prepared according to Example 1 (Run 3; with epoxy and additives removed) were loaded with zinc oxide (ZnO) at 2% and 5% based on the total weight of the composition. Test panels were prepared by applying the primer formulation to cold-rolled steel, and heat stability at different temperatures of 160°F (71°C), 170°F (76°C) and 180°F (82°C) was assessed using GC/MS headspace analysis. The detection and magnitude of HCl generation corresponds to degradation of the resin. Results are shown in Table 9.

**Table 9. Effect of Zn on Heat Stability of Primer**

| **Primer Formulation** | **Days to Failure** | | |
|---|---|---|---|
| | **At 71°C** | **At 76°C** | **At 82°C** |
| Control (Run 3, Example 1) | 28+ | 14 | 4 |
| Control + 2% ZnO | 10 | 7 | 2 |
| Control + 5% ZnO | 10 | 7 | 2 |

### EXAMPLE 10: Effect of Type of Zn-containing Species

To evaluate the effect of various types of Zn on the heat stability of the chlorinated resin, primer formulations prepared according to Example 1 (Run 3, but with epoxy resin and additives omitted) were loaded with zinc oxide (ZnO), zinc dust, zinc sulphate (ZnSO₄) and Zn(NO₃)₂. Each type of Zn-containing compound was added at 2% and 5% based on the total weight of the composition, keeping in mind that the amount of zinc in each type of composition will differ. In addition, formulations with these Zn-containing species were treated with epoxy resin (Epi-Rez 3510) to determine the effect of the epoxy resin on heat stability of the formulation.

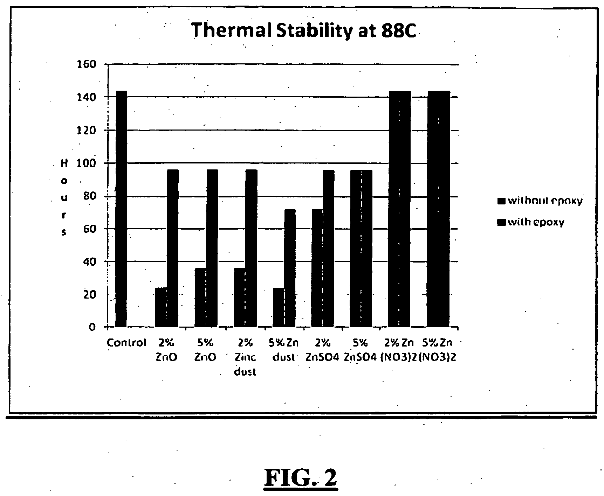

Test panels were prepared by applying the primer formulation to cold-rolled steel, and heat stability at a temperature of 190°F (88°C) was assessed using GC/MS headspace analysis. Results are shown in Table 10, and graphically represented in Figure 2.

**Table 10. Effect of Type of Zinc on Heat Stability**

| **Primer Formulation** | **Hours to Failure (at 88°C)** | |
|---|---|---|
| | **Without Epoxy** | **With Epoxy** |
| Control (Example 1, Run 3) | 144+ | -- |
| 2% ZnO | 24 | 96 |
| 5% ZnO | 36 | 96 |
| 2% Zn dust | 36 | 72 |
| 5% Zn dust | 24 | 72 |
| 2% ZnSO₄ | 72 | 96 |
| 5% ZnSO₄ | 96 | 96 |
| 2% Zn(NO₃)₂ | 144 | 144 |
| 5% Zn(NO₃)₂ | 144 | 144 |

### EXAMPLE 11: Effect of Additives on Primer Performance

Without being bound to theory, it is believed that certain flash rust inhibitors may minimize oxidative attack of the coating by passivating the substrate surface and reducing the reaction of HCl (produced by degradation of the chlorinated resin) with iron to form the Lewis acidic iron chloride.

Eight different flash rust inhibitors (sodium nitrite, sodium benzoate, ammonium benzoate/morpholine, aluminum tripolyphosphate, diammonium hydrogen phosphate, ammonium dihydrogen phosphate, calcium phosphate and potassium tripolyphosphate) are added at a concentration of 1% to a clear formulation of the chlorinated resin. The formulation is applied to test panels and the panels are exposed to heat. The results of cross-hatch adhesion testing are shown in Table 11.

**Table 11. Effect of Flash Rust Inhibitors on Primer Performance**

| **Formulation** | **Days to failure (50% adhesion loss)** |
|---|---|
| Control | 16 |
| Sodium nitrite | 22 |
| Ammonium benzoate | 16 |
| sodium benzoate | 16 |
| Aluminum tripolyphosphate | 16 |
| Diammonium hydrogen phosphate | 34 |
| Ammonium dihydrogen phosphate | 31 |
| Calcium phosphate | 23 |
| Potassium tripolyphosphate | 31 |

### EXAMPLE 12: Effect of Acrylic Resin on Heat Stability of Primer Composition

To evaluate the effect of acrylic resin on the heat stability of chlorinated resin component (PVDC), resin emulsions were prepared as shown in Table 12 below, with Acrylic 1 representing an acrylic polymer composition and Acrylic 2 representing a styrene-acrylic copolymer. The emulsions were applied to test panels, exposed to heat (230°F; 110°C) and tested for cross-hatch adhesion. Results are shown in Table 12.

**Table 12. Effect of Acrylic Resin on Heat Stability**

| **Emulsion** | **Days to Failure (at 110°C)** |
|---|---|
| 100 % PVDC Emulsion | 1 |
| 50% PVDC/50% Acrylic 1 | 15 |
| 50% PVDC/50% Acrylic 2 | 15 |

## Claims

1. A coating system, comprising:
a first aqueous coating composition, comprising
an aqueous carrier;
a first resin component in admixture with the aqueous carrier and comprising at least one chlorinated resin; and
one or more fillers; and
a second aqueous coating composition, comprising
an aqueous carrier;
a second resin component in admixture with the aqueous carrier and comprising at least one resin compatible with the first resin component; and
one or more pigments wherein a dried coating prepared from the second aqueous coating composition comprises at least 15 vol% of pigment based on the total volume of coating solids in the dried coating; or
a second coating composition, comprising
a carrier;
a second resin component in admixture with the carrier; and
one or more pigments,
wherein the carrier in admixture with the second resin component may be an aqueous solvent or a non-aqueous solvent.

2. The coating system of claim 1, wherein the first aqueous coating composition comprises from 20 to 80 weight percent of the first resin component.

3. The coating system of claim 1 or 2, wherein the first resin component comprises from 50 to 100 weight percent chlorinated resin based on the total weight of the first resin component.

4. The coating system of any preceding claim, wherein the chlorinated resin is polyvinylidene chloride.

5. The coating system of any preceding claim, wherein the first aqueous composition optionally comprises one or more heat-stabilizing additives.

6. The coating system of claim 5, wherein the heat-stabilizing additive further comprises up to 50 weight percent epoxy-functional resin based on the total weight of resin in the first aqueous coating composition.

7. The coating system of any preceding claim, wherein the first aqueous coating composition contains no more than 5 weight percent Zn or Zn-containing species.

8. The coating system of any preceding claim, wherein one or more of the fillers comprised in the first aqueous coating composition are selected from BaSO₄, CaCO_{3,} dolomite, wollastonite, silica, chlorite, talc, china clay, mica, glass beads, and mixtures thereof.

9. The coating system of any preceding claim, wherein the one or more fillers comprised in the first aqueous coating composition have a total oil absorption of 10 to 40 g per 100 g total weight of the filler.

10. A coated article, comprising:
a substrate surface;
a first coating formed directly or indirectly on at least a portion of the substrate surface, said coating comprising the first aqueous coating composition of the coating system of claim 1; and
optionally, a second coating formed directly or indirectly on at least a portion of the first coating, said coating comprising the second coating composition of the coating system of claim 1.

## Patentansprüche

1. Ein Beschichtungssystem, umfassend:
eine erste wässrige Beschichtungszusammensetzung, umfassend
einen wässrigen Träger;
eine erste Harzkomponente in Mischung mit dem wässrigen Träger und umfassend mindestens ein chloriertes Harz; und
ein oder mehrere Füllstoffe; und
eine zweite wässrige Beschichtungszusammensetzung, umfassend
einen wässrigen Träger;
eine zweite Harzkomponente in Mischung mit dem wässrigen Träger und umfassend mindestens ein Harz, das mit der ersten Harzkomponente kompatibel ist; und
ein oder mehrere Pigmente, wobei eine getrocknete Beschichtung, die aus der zweiten Beschichtungszusammensetzung hergestellt wurde, mindestens 15 Vol% des Pigments, bezogen auf das Gesamtvolumen der Beschichtungsfeststoffe in der getrockneten Beschichtung, umfasst; oder
eine zweite Beschichtungszusammensetzung, umfassend
einen Träger;
eine zweite Harzkomponente in Mischung mit dem Träger; und
ein oder mehrere Pigmente,
wobei der Träger in Mischung mit der zweiten Harzkomponente ein wässriges Lösungsmittel oder ein nicht-wässriges Lösungsmittel sein kann.

2. Das Beschichtungssystem gemäß Anspruch 1, wobei die erste wässrige Beschichtungszusammensetzung 20 bis 80 Gew.-% der ersten Harzkomponente umfasst.

3. Das Beschichtungssystem gemäß Anspruch 1 oder 2, wobei die erste Harzkomponente 50 und 100 Gew.-% chloriertes Harz, bezogen auf das Gesamtgewicht der ersten Harzkomponente, umfasst.

4. Das Beschichtungssystem gemäß einem der vorhergehenden Ansprüche, wobei das chlorierte Harz Polyvinylidenchlorid ist.

5. Das Beschichtungssystem gemäß einem der vorangehenden Ansprüche, wobei die erste wässrige Zusammensetzung gegebenenfalls ein oder mehrere wärmestabilisierende Additive umfasst.

6. Das Beschichtungssystem gemäß Anspruch 5, wobei das wärmestabilisierende Additiv ferner bis zu 50 Gew.-% epoxyfunktionelles Harz, bezogen auf das Gesamtgewicht des Harzes in der ersten wässrigen Beschichtungszusammensetzung, umfasst.

7. Das Beschichtungssystem gemäß einem der vorangehenden Ansprüche, wobei die erste wässrige Beschichtungszusammensetzung nicht mehr als 5 Gew.-% an Zn oder Znhaltige Spezies enthält.

8. Das Beschichtungssystem gemäß einem der vorangehenden Ansprüche, wobei ein oder mehrere der Füllstoffe, die in der ersten wässrigen Beschichtungszusammensetzung umfasst sind, aus BaSO₄ CaCO₃, Dolomit, Wollastonit, Siliciumdioxid, Chlorit, Talk, Porzellanerde, Glimmer, Glasperlen und Gemischen davon ausgewählt sind.

9. Das Beschichtungssystem gemäß einem der vorangehenden Absprüche, wobei der eine oder die mehreren Füllstoffe, die in der ersten wässrigen Beschichtungszusammensetzung umfasst sind, eine Gesamtölabsorption von 10 bis 40 g pro 100 g Gesamtgewicht des Füllstoffs aufweisen.

10. Ein beschichteter Gegenstand, umfassend:
eine Substratoberfläche;
eine erste Beschichtung, die direkt oder indirekt auf mindestens einem Teil der Substratoberfläche gebildet ist, wobei die Beschichtung die erste wässrige Beschichtungszusammensetzung des Beschichtungssystems gemäß Anspruch 1 umfasst; und
gegebenenfalls eine zweite Beschichtung, die direkt oder indirekt auf mindestens einem Teil der ersten Beschichtung gebildet ist, wobei die Beschichtung die zweite Beschichtungszusammensetzung des Beschichtungssystems gemäß Anspruch 1 umfasst.

## Revendications

1. Système de revêtement, comprenant :
une première composition aqueuse de revêtement, comprenant
un véhicule aqueux ;
un premier composant de résine en mélange avec le véhicule aqueux et comprenant
au moins une résine chlorée ; et
une ou plusieurs charges ; et
une deuxième composition aqueuse de revêtement, comprenant
un véhicule aqueux ;
une deuxième composant de résine en mélange avec le véhicule aqueux et comprenant au moins une résine compatible avec le premier composant de résine ; et
un ou plusieurs pigments, dans lequel un revêtement séché préparé à partir de la deuxième composition aqueuse de revêtement comprend au moins 15 % en volume de pigment sur la base du volume total de matières solides de revêtement dans le revêtement séché ; ou
une deuxième composition de revêtement, comprenant
un véhicule ;
un deuxième composant de résine en mélange avec le véhicule ; et
un ou plusieurs pigments,
dans lequel le véhicule en mélange avec le deuxième composant de résine peut être un solvant aqueux ou un solvant non aqueux.

2. Système de revêtement selon la revendication 1, dans lequel la première composition aqueuse de revêtement comprend de 20 à 80 % poids du premier composant de résine.

3. Système de revêtement selon la revendication 1 ou 2, dans lequel le premier composant de résine comprend de 50 à 100 % en poids d'une résine chlorée sur la base du poids total du premier composant de résine.

4. Système de revêtement selon l'une quelconque des revendications précédentes, dans lequel la résine chlorée est le chlorure de polyvinylidène.

5. Système de revêtement selon l'une quelconque des revendications précédentes, dans lequel la première composition aqueuse comprend éventuellement un ou plusieurs additifs thermostabilisants.

6. Système de revêtement selon la revendication 5, dans lequel l'additif thermostabilisant comprend en outre jusqu'à 50 % en poids d'une résine ayant une fonction époxy sur la base du poids total de la résine dans la première composition aqueuse de revêtement.

7. Système de revêtement selon l'une quelconque des revendications précédentes, dans lequel la première composition aqueuse de revêtement ne contient pas plus de 5 % en poids de Zn ou d'une espèce contenant du Zn.

8. Système de revêtement selon l'une quelconque des revendications précédentes, dans lequel une ou plusieurs des charges incluses dans la première composition aqueuse de revêtement sont choisies parmi BaSO₄, CaCO₃, la dolomite, la wollastonite, la silice, le chlorite, le talc, l'argile de chine, le mica, les billes de verre, et des mélanges de ceux-ci.

9. Système de revêtement selon l'une quelconque des revendications précédentes, dans lequel une ou plusieurs des charges incluses dans la première composition aqueuse de revêtement ont une absorption d'huile totale de 10 à 40 g pour 100 g de poids total de la charge.

10. Article revêtu, comprenant :
une surface de substrat ;
un premier revêtement formé directement ou indirectement sur au moins une portion de la surface de substrat, ledit revêtement comprenant la première composition aqueuse de revêtement du système de revêtement selon la revendication 1 ; et
éventuellement, un deuxième revêtement formé directement ou indirectement sur au moins une portion du premier revêtement, ledit revêtement comprenant la deuxième composition aqueuse de revêtement du système de revêtement selon la revendication 1.
